# EUROPÄISCHE PATENTSCHRIFT

(11) **EP 4 202 522 B1**
(45) Veröffentlichungstag und Bekanntmachung des Hinweises auf die Patenterteilung: **19.03.2025**
(21) Anmeldenummer: 22212513.0
(22) Anmeldetag: 09.12.2022
(51) Int. Cl.: G02B 21/00

(54) **VORRICHTUNGEN ZUR ÜBERPRÜFUNG DER LATERALEN UND AXIALEN KONFOKALITÄT EINER SCANNENDEN UND ENTSCANNENDEN MIKROSKOPBAUGRUPPE**
DEVICES FOR CHECKING THE LATERAL AND AXIAL CONFOCALITY OF A SCANNING AND DESCANNING MICROSCOPE ASSEMBLY
DISPOSITIFS DE VÉRIFICATION DE LA CONFOCALITÉ LATÉRALE ET AXIALE D'UN ENSEMBLE MICROSCOPE À BALAYAGE ET À DÉBALAYAGE

(30) Priorität: 22.12.2021 DE 102021134384
(43) Veröffentlichungstag der Anmeldung: 28.06.2023
(73) Patentinhaber: Abberior Instruments GmbH, 37077 Göttingen (DE)
(72) Erfinder: Fischer, Dr. Joachim, 76228 Karlsruhe (DE); Henrich, Dr. Matthias, 69115 Heidelberg (DE)
(74) Vertreter: REHBERG HÜPPE + PARTNER

(56) Entgegenhaltungen:
- WO-A1-2020/254303
- US-A1- 2013 123 759

## Beschreibung

### TECHNISCHES GEBIET DER ERFINDUNG

Die Erfindung bezieht sich auf eine scannende und entscannende Mikroskopbaugruppe mit einer Überprüfungsvorrichtung zur Überprüfung der Konfokalität der Mikroskopbaugruppe und auf eine Hilfsvorrichtung zur Überprüfung der Konfokalität einer scannenden und entscannenden Mikroskopbaugruppe.

Die scannende und entscannende Mikroskopbaugruppe weist eine ein Beleuchtungslicht bereitstellende Lichtquelle, eine das Beleuchtungslicht längs einer optischen Achse in einen Fokusbereich fokussierende Optik, einen Licht aus dem Fokusbereich detektierenden Detektor und einen lateral zu der optischen Achse scannenden Scanner auf, wobei der Scanner zwischen der Lichtquelle und dem Detektor einerseits und dem Fokusbereich andererseits angeordnet ist. Bei einer solchen scannenden und entscannenden Mikroskopbaugruppe ist eine genaue konfokale Anordnung einer Detektionsapertur des Detektors zu dem Fokusbereich, in den das Beleuchtungslicht der Lichtquelle fokussiert wird, wichtig, um das mit dem Beleuchtungslicht in dem Fokusbereich hervorgerufene Licht optimal zu messen. Eine genaue konfokale Anordnung der Detektionsapertur ist dann erreicht, wenn die Detektionsapertur bezüglich ihrer Abbildung in den Fokusbereich konzentrisch zu dem Fokusbereich des Beleuchtungslichts angeordnet ist.

### STAND DER TECHNIK

Zur Überprüfung der Konfokalität einer scannenden und entscannenden Mikroskopbaugruppe mit einer Beleuchtungslicht bereitstellenden Lichtquelle, mit einer das Beleuchtungslicht in einen Fokus in einer Fokusebene fokussierenden Optik, mit einem Licht aus dem Fokus detektierenden Detektor, der eine konfokal zu dem Fokus anzuordnende Detektionsapertur aufweist, und mit einem Scanner zwischen der Lichtquelle und dem Detektor einerseits und der Fokusebene andererseits ist es aus der WO 2020/254303 A1 bekannt, eine in der Fokusebene angeordnete Detektionshilfsapertur eines Hilfsdetektors durch Verstellen des Scanners mit dem Fokus des Beleuchtungslichts abzutasten. Dabei wird eine erste Intensitätsverteilung des von dem Hilfsdetektor registrierten Beleuchtungslichts über verschiedene Stellungen des Scanners hinweg erfasst. Weiterhin wird durch Verstellen des Scanners mit Hilfslicht, das durch eine konzentrisch zu der Detektionshilfsapertur in der Fokusebene angeordnete Emissionshilfsapertur einer Hilfslichtquelle austritt, die Detektionsapertur des Detektors abgetastet. Dabei wird eine zweite Intensitätsverteilung des von dem Detektor registrierten Hilfslichts über die Stellungen des Scanners hinweg erfasst. Mindestens ein Unterschied zwischen der ersten Intensitätsverteilung und der zweiten Intensitätsverteilung über die verschiedenen Stellungen des Scanners hinweg wird dann als Maß für einen Fehler der Konfokalität der scannenden und entscannenden Mikroskopbaugruppe verwendet.

Alternativ zu dem Abtasten der Detektionshilfsapertur des Hilfsdetektors mit dem Fokus des Beleuchtungslichts kann eine konzentrisch zu der Emissionsapertur der Lichtquelle angeordnete Detektionshilfsapertur eines separaten Hilfsdetektors durch Verstellen des Scanners mit dem Hilfslicht, das durch die in der Fokusebene angeordnete Emissionshilfsapertur der Hilfslichtquelle austritt, abgetastet werden, um die erste Intensitätsverteilung mit Hilfe des separaten Hilfsdetektors zu erfassen. Weiterhin kann alternativ zu dem Abtasten der Detektionsapertur des Detektors mit dem Hilfslicht von der Hilfslichtquelle die in der Fokusebene angeordnete Detektionshilfsapertur des Hilfsdetektors durch Verstellen des Scanners mit weiterem Hilfslicht, das durch eine konzentrisch zu der Detektionsapertur angeordnete Emissionshilfsapertur einer separaten Hilfslichtquelle austritt, abgetastet werden, um die zweite Intensitätsverteilung mit Hilfe des Hilfsdetektors zu erfassen.

Der besonders interessierende Unterschied zwischen der ersten Intensitätsverteilung und der zweiten Intensitätsverteilung ist ein Lageunterschied zwischen Maxima oder Schwerpunkten der beiden Intensitätsverteilungen. Zum Erreichen oder Erhalten der gewünschten Konfokalität, wird jeder auftretende Lageunterschied durch eine reale oder virtuelle Relativverlagerung der Detektionsapertur des Detektors gegenüber der Lichtquelle kompensiert.

Die Fokusebene, in der zumindest die Detektionshilfsapertur oder die Emissionshilfsapertur angeordnet wird, kann eine Zwischenbildebene eines die scannende und entscannende Mikroskopbaugruppe und ein Objektiv umfassenden Laserscanningmikroskops sein oder in einem Abzweig von einem Hauptstrahlengang eines solchen Laserscanningmikroskops angeordnet sein.

Aus der US 2013/ 0 123 759 A1 ist ein Oberflächenverfolgungs- und Bewegungskompensationssystem für ein chirurgisches Werkzeug bekannt. Zu dem System gehört ein chirurgisches Werkzeug, das ein Handstück und eine bewegliche Komponente sowie eine Antriebsanordnung umfasst. Die Antriebsanordnung schließt die bewegliche Komponente an das Handstück an, so dass die bewegliche Komponente durch die Antriebseinrichtung in einer axialen Richtung relativ zu dem Handstück bewegbar ist. Das System umfasst auch ein optisches Detektionssystem, das eine optische Faser umfasst, die an der beweglichen Komponente befestigt ist, wobei ein Ende der optischen Faser in einem festen Abstand zu einem distalen Bereich der beweglichen Komponente ist. Das optische Detektionssystem ist konfiguriert, um während eines chirurgischen Eingriffs ein Signal für die Bestimmung einer Entfernung des distalen Bereichs der beweglichen Komponente zu einem Ziel auszugeben.

### AUFGABE DER ERFINDUNG

Der Erfindung liegt die Aufgabe zugrunde, die aus der WO 2020/254303 A1 bekannte Überprüfung der Konfokalität einer scannenden und entscannenden Mikroskopbaugruppe grundsätzlich zu verbessern.

### LÖSUNG

Die Aufgabe der Erfindung wird durch eine scannende und entscannende Mikroskopbaugruppe mit den Merkmalen des unabhängigen Patentanspruchs 1 sowie mit Hilfe einer Hilfsvorrichtung zur Überprüfung der Konfokalität einer scannenden und entscannenden Mikroskopbaugruppe mit den Merkmalen des Patentanspruchs 12 gelöst. Die Patentansprüche 2 bis 11 sind auf bevorzugte Ausführungsformen der erfindungsgemäßen Mikroskopbaugruppe bzw. ein Laserscanningmikroskop mit einer solchen erfindungsgemäßen Mikroskopbaugruppe gerichtet. Die Patentansprüche 13 bis 15 betreffen bevorzugte Ausführungsformen der erfindungsgemäßen Hilfsvorrichtung.

### BESCHREIBUNG DER ERFINDUNG

Die vorliegende Erfindung erweitert die aus der WO 2020/254303 A1 bekannte Überprüfung der Konfokalität einer scannenden und entscannenden Mikroskopbaugruppe um eine Überprüfung der axialen Konfokalität der scannenden und entscannenden Mikroskopbaugruppe. Dabei kommen ein spezieller Hilfsdetektor und/oder eine spezielle, Hilfslicht bereitstellende Hilfslichtquelle zur Anwendung. Der Hilfsdetektor weist eine Detektionshilfsapertur, die in mehrere in Richtung der optischen Achse voneinander beabstandete Detektionshilfsaperturstellungen verfahrbar ist, oder mehrere Detektionshilfsaperturen in mehreren in Richtung der optischen Achse und lateral zu der optischen Achse voneinander beabstandeten Detektionshilfsaperturstellungen auf. Die Hilfslichtquelle weist eine Emissionshilfsapertur, die in mehrere in Richtung der optischen Achse voneinander beabstandete Emissionshilfsaperturstellungen verfahrbar ist, oder mehrere Emissionshilfsaperturen in mehreren in Richtung der optischen Achse und lateral zu der optische Achse voneinander beabstandeten Emissionshilfsaperturstellungen auf, aus der bzw. denen das Hilfslicht austritt.

Wenn die Detektionshilfsapertur und/oder die Emissonshilfsapertur verfahrbar ist, erfordert dies keine stufenlose Verfahrbarkeit. Vielmehr ist es entscheidend, dass die in Richtung der optischen Achse voneinander beabstandeten Detektions- bzw. Emissionshilfsaperturstellungen wiederholt präzise angefahren werden können.

Der Hilfsdetektor und/oder die Hilfslichtquelle sind in einem Fokusbereich einer fokussierenden Optik der scannenden und entscannenden Mikroskopbaugruppe angeordnet, wobei dann, wenn sowohl der Hilfsdetektor als auch die Hilfslichtquelle in dem Fokusbereich angeordnet sind, die Detektionshilfsapertur und die Emissionshilfsapertur bzw. die Detektionshilfsaperturen und die Emissionshilfsaperturen paarweise konzentrisch angeordnet sind. Dies impliziert, dass entweder sowohl die Detektionshilfsapertur als auch die Emissonshilfsapertur verfahrbar ist oder sowohl mehrere Detektionshilfsaperturen als auch mehrere Emissionshilfsaperturen vorhanden sind.

Die scannende und entscannende Mikroskopbaugruppe, deren Konfokalität zu überprüfen ist, weist eine erste Lichtquelle, die erstes Beleuchtungslicht bereitstellt, eine fokussierende Optik, die das erste Beleuchtungslicht längs einer optischen Achse in einen Fokusbereich fokussiert, einen ersten Detektor, der eine erste Detektionsapertur aufweist und erstes Licht aus dem Fokusbereich detektiert, und einen Scanner auf, der lateral zu der optischen Achse scannt und der zwischen der ersten Lichtquelle und dem ersten Detektor einerseits und dem Fokusbereich andererseits angeordnet ist.

Der Detektor kann ein Punktdetektor sein, dessen Detektionsapertur durch die aktive Fläche seines lichtempfindlichen Elements oder eine davor angeordnete Lochblende definiert ist. Der Detektor kann aber auch ein Arraydetektor mit mehreren lichtempfindlichen Elementen sein. Dann kann als seine Detektionsapertur entweder die aktive Fläche eines zentralen lichtempfindlichen Elements oder die Gesamtheit der aktiven Flächen einer zentralen Gruppe der lichtempfindlichen Elemente oder die Gesamtheit der aktiven Flächen aller lichtempfindlichen Elemente angesehen werden. Grundsätzlich kann auch jeder Hilfsdetektor entweder als Punktdetektor oder als Arraydetektor ausgebildet sein, wobei eine Ausbildung als Punktdetektor in aller Regel ausreichend ist.

Zur Überprüfung sowohl der lateralen als auch der axialen Konfokalität der scannenden und entscannenden Mikroskopbaugruppe werden der in dem Fokusbereich angeordnete Hilfsdetektor und/oder die in dem Fokusbereich angeordnete Hilfslichtquelle wie folgt verwendet.

Durch Verstellen des Scanners wird die Detektionshilfsapertur des Hilfsdetektors oder werden die mehreren Detektionshilfsaperturen des Hilfsdetektors in den mehreren Detektionshilfsaperturstellungen mit dem fokussierten ersten Beleuchtungslicht abgetastet. Dabei werden erste Intensitätsverteilungen des von dem Hilfsdetektor registrierten ersten Beleuchtungslichts über verschiedene Stellungen des Scanners hinweg erfasst.

Alternativ können die ersten Intensitätsverteilungen erfasst werden, indem eine konzentrisch zu einer ersten Emissionsapertur der ersten Lichtquelle angeordnete erste weitere Detektionshilfsapertur eines ersten weiteren Hilfsdetektors durch Verstellen des Scanners mit dem Hilfslicht, das durch die Emissionshilfsapertur oder die mehreren Emissionshilfsaperturen der Hilfslichtquelle in den mehreren Emissionshilfsaperturstellungen austritt, abgetastet wird. Dann sind die ersten Intensitätsverteilungen solche des Hilfslichts und werden von dem ersten weiteren Hilfsdetektor über die verschiedenen Stellungen des Scanners hinweg erfasst. Unter einer Emissionshilfsapertur der ersten und jeder anderen Lichtquelle oder Hilfslichtquelle ist hier die Querschnittsfläche zu verstehen, aus der das Beleuchtungslicht austritt. Wenn die jeweilige Lichtquelle kollimiertes Licht bereitstellt, ist darüber hinaus jeder Strahlquerschnitt des kollimierten Lichts als Emissionsapertur ansehbar und für die Zwecke der vorliegenden Erfindung verwendbar.

Weiterhin wird die erste Detektionsapertur des ersten Detektors durch Verstellen des Scanners mit dem Hilfslicht, das durch die Emissionshilfsapertur oder die mehreren Emissionshilfsaperturen der Hilfslichtquelle in den mehreren Emissionshilfsaperturstellungen austritt, abgetastet. Dabei werden zweite Intensitätsverteilungen des von dem Detektor registrierten Hilfslichts über die verschiedenen Stellungen des Scanners hinweg erfasst.

Alternativ können die zweiten Intensitätsverteilungen erfasst werden, indem durch Verstellen des Scanners mit erstem weiterem Hilfslicht, das durch eine konzentrisch zu der ersten Detektionsapertur angeordnete erste weitere Emissionshilfsapertur einer ersten weiteren Hilfslichtquelle austritt, die Detektionshilfsapertur oder die mehreren Detektionshilfsaperturen des Hilfsdetektors in den mehreren Detektionshilfsaperturstellungen abgetastet wird oder werden. Dabei sind die zweiten Intensitätsverteilungen solche des ersten weiteren Hilfslichts und werden mit dem Hilfsdetektor über die Stellungen des Scanners hinweg erfasst.

Wenn mehrere Detektionshilfsaperturen und/oder mehrere Emissionshilfsaperturen vorhanden sind, die lateral zu der optische Achse voneinander beabstandet sind, dann sollten deren lateralen Abstände die mehreren Detektions- bzw. Emissionshilfsaperturen bei ihrem jeweiligen Abtasten so weit voneinander trennen, dass die ersten bzw. zweiten Intensitätsverteilungen getrennt voneinander erhalten werden oder zumindest voneinander trennbar sind. Die lateralen Abstände sollten aber auch nicht viel größer sein, als es für diesen Zweck nötig ist.

Die Intensitätsverteilungen werden miteinander verglichen. Dabei wird aus Unterschieden zwischen den ersten Intensitätsverteilungen eine Fokuslage eines Fokus des fokussierten ersten Beleuchtungslichts der ersten Lichtquelle in dem Fokusbereich in Richtung der optischen Achse erfasst; und aus Unterschieden zwischen den zweiten Intensitätsverteilungen wird eine Lage eines Bilds der ersten Detektionsapertur des ersten Detektors in dem Fokusbereich in Richtung der optische Achse erfasst. Für diese Zwecke ist es günstig, wenn die Durchmesser der Detektions- bzw. Emissionshilfsaperturen etwa so groß sind wie oder kleiner sind als der Durchmesser des Fokus des fokussierten ersten Beleuchtungslichts in dem Fokusbereich bzw. der Durchmesser des Bilds der ersten Detektionsapertur in dem Fokusbereich.

Wenn die Fokuslage und die Bildlage übereinstimmen, ist eine axiale Konfokalität der scannenden und entscannenden Mikroskopbaugruppe gegeben. Die relevante axiale Konfokalität ist aber nur dann gegeben, wenn die Fokuslage des Fokus des fokussierten ersten Beleuchtungslichts der ersten Lichtquelle und die Bildlage des Bilds der ersten Detektionsapertur des ersten Detektors in einem Objektfokusbereich auf einer Objektseite eines Objektivs in Richtung der optischen Achse zusammenfallen. Wenn sich die Wellenlängen des ersten Beleuchtungslichts und des von dem ersten Detektor detektierten ersten Lichts unterscheiden, muss dies, zum Beispiel aufgrund wellenlängenabhängiger Eigenschaften des Objektivs, nicht bedeuten, dass die Fokuslage und die Bildlage auch in einem anderen Fokusbereich zusammenfallen, d. h. in dem Fokusbereich, in dem der Hilfsdetektor und/oder die Hilfslichtquelle angeordnet werden.

Wenn die Fokuslage und die Bildlage in dem relevanten Objektfokusbereich nicht zusammenfallen, können die Fokuslage und die Bildlage durch eine reale und/oder virtuelle Relativverlagerung der ersten Detektionsapertur des ersten Detektors gegenüber der ersten Lichtquelle in dem Objektfokusbereich aneinander angeglichen werden. Bezogen auf einen beliebigen Fokusbereich können Abweichungen der Fokuslage von einer Sollfokuslage und der Bildlage von einer Sollbildlage aus den Unterschieden zwischen den ersten Intensitätsverteilungen bzw. den Unterschieden zwischen den zweiten Intensitätsverteilungen erfasst werden. Diese Abweichungen können dann durch reale und/oder virtuelle Verlagerungen der ersten Detektionsapertur des ersten Detektors und/oder der ersten Lichtquelle kompensiert werden. Die Sollfokuslage und die Sollbildlage sind dabei so festzulegen, dass die Fokuslage des Fokus des fokussierten ersten Beleuchtungslichts der ersten Lichtquelle und die Bildlage des Bilds der ersten Detektionsapertur des ersten Detektors in einem Objektfokusbereich auf einer Objektseite eines Objektivs in Richtung der optischen Achse zusammenfallen. Bei virtuellen Verlagerungen werden nicht die ersten Detektionsapertur des ersten Detektors und/oder die erste Lichtquelle selbst verlagert, sondern es werden optische Elemente verlagert oder anderweitig verändert, die vorzugsweise selektiv auf das erste Licht auf seinem Weg zu der ersten Detektionsapertur bzw. das erste Beleuchtungslicht auf seinem Weg von der ersten Lichtquelle einwirken.

Bei den relevanten Unterschieden zwischen den ersten Intensitätsverteilungen bzw. den zweiten Intensitätsverteilungen aus denen auf die Fokuslage bzw. die Bildlage rückgeschlossen wird, kommt es insbesondere auf die Flächen der zweidimensionalen Intensitätsverteilungen an. Dies sind beispielsweise die jeweils kleinsten Flächen, auf die ein bestimmter Prozentsatz der Intensität entfällt, oder die Flächen, innerhalb derer von der Intensität ein bestimmter Grenzwert, beispielsweise ein Prozentsatz der mittleren oder maximalen Intensität der Intensitätsverteilung überschritten wird. Die interessierende Fokuslage bzw. Bildlage findet sich dort, wo die Fläche der jeweiligen Intensitätsverteilung längs der optischen Achse ihr Minimum aufweist. Dieses Minimum kann bei einer oder zwischen mehreren der Detektions- bzw. Emissionshilfsaperturstellungen liegen. Wenn man die Strahlform des jeweiligen Beleuchtungslichts, Hilfslichts und/oder weiteren Hilfslichts im Bereich des jeweiligen Detektors, Hilfsdetektors und/oder weiteren Hilfsdetektors kennt, also zum Beispiel weiß, dass es ein Gauß-Strahl mit einer bestimmten Strahltaille und Rayleigh-Länge ist, reichen zwei verschiedene Detektions- bzw. Emissionshilfsaperturstellungen längs der optischen Achse. Um das Minimum auch ohne detaillierte Vorkenntnisse sicher aufzufinden, sind drei verschiedene Detektions- bzw. Emissionshilfsaperturstellungen längs der optischen Achse, die zudem um die Fokuslage bzw. Bildlage herum verteilt angeordnet sind, von Vorteil. Neben den Flächen der Intensitätsverteilungen können auch deren Formen bei der Betrachtung ihrer Unterschiede Berücksichtigung finden. Um die Aussagekraft der Formen der Intensitätsverteilungen zu erhöhen, kann in die fokussierende Optik gezielt eine Verzeichnung, wie beispielsweise ein Astigmatismus eingeführt werden, wie dem Fachmann grundsätzlich bekannt ist.

Zur Überprüfung der lateralen Konfokalität kann auf die Lehre der WO 2020/254303 A1 zurückgegriffen werden. So kann aus dem Vergleich einer der ersten Intensitätsverteilungen mit einer der zweiten Intensitätsverteilungen, insbesondere aus dem Vergleich der Lagen deren Maxima, Mittelpunkte und/oder Schwerpunkte auf die laterale Konfokalität bzw. das Maß einer vorhandenen Abweichung von der gewünschten lateralen Konfokalität der scannenden und entscannenden Mikroskopbaugruppe geschlossen werden. Besonders einfach ist dieser Rückschluss dann, wenn die miteinander verglichenen ersten und zweiten Intensitätsverteilungen denselben Detektions- bzw. Emissionshilfsaperturstellungen entsprechen. Anderenfalls sind vorhandene Unterschiede zwischen den den ersten und zweiten Intensitätsverteilungen zugrundeliegenden Detektions- bzw. Emissionshilfsaperturstellungen zu berücksichtigen.

Der Hilfsdetektor und/oder die Hilfslichtquelle, d. h. die Detektionshilfsaperturstellungen und/oder die Emissionshilfsaperturstellungen, können um eine Objektebene eines die scannende und entscannende Mikroskopbaugruppe und ein Objektiv umfassenden Mikroskopstrahlengangs eines Laserscanningmikroskops herum angeordnet sein. Diese Anordnung im Bereich der Objektebene ist zum einen nur vorübergehend möglich, weil hier die mit dem Laserscanningmikroskop zu untersuchenden Proben anzuordnen sind. Zum anderen müssen die Detektions- und/oder Emissionshilfsaperturen und die Abstände ihrer Detektions- und/oder Emissionshilfsaperturstellungen für ihre Anordnung im Bereich der Objektebene mikroskopisch klein ausgeführt werden. Auch bei der Anordnung der Detektionshilfsaperturstellungen und/oder der Emissionshilfsaperturstellungen um eine Zwischenbildebene des Mikroskopstrahlengangs herum kann es erforderlich sein, den Hilfsdetektor und/oder die Hilfslichtquelle zur eigentlichen Verwendung des Laserscanningmikroskops zu entfernen. Wenn die Detektionshilfsaperturstellungen und/oder die Emissionshilfsaperturstellungen jedoch in einem Abzweig von einem Hauptstrahlengang des Mikroskopstrahlengangs um eine Zwischenbildebene herum angeordnet werden, können der Hilfsdetektor und/oder die Hilfslichtquelle dort stationär angeordnet werden.

Um die Fokuslage bzw. die Bildlage aus den ersten bzw. zweiten Intensitätsverteilungen sicher ermitteln zu können, erweist es sich als vorteilhaft, wenn die Detektionshilfsaperturstellungen und/oder die Emissionshilfsaperturstellungen längs der optischen Achse jeweils über eine Entfernung von 0,5 mm bis 10 mm verteilt sind. Diese absolute Angabe zu der Entfernung bezieht sich auf die Anordnung der Detektionshilfsaperturen bzw. Emissionshilfsaperturen um eine Zwischenbildebene des Mikroskopstrahlengangs herum, d. h. auf der der Objektseite abgekehrten Seite des Objektivs. Bezogen auf eine zur Objektivvergrößerung proportionale Vergrößerung M zwischen dem Objektfokusbereich auf der Objektseite des Objektivs und der Zwischenbildebene, um die herum die Detektionshilfsaperturstellungen und/oder die Emissionshilfsaperturstellungen angeordnet werden, liegt die Entfernung, über die die Detektionshilfsaperturstellungen bzw. Emissionshilfsaperturstellungen vorzugsweise längs der optischen Achse verteilt sind, in einem Bereich von 0,2 µm x M² bis 1 µm x M².

Günstigerweise haben die mehreren Detektionshilfsaperturen des Hilfsdetektors und/oder die mehreren Emissionshilfsaperturen der Hilfslichtquelle gleiche Abmessungen und Formen quer zu der optischen Achse, d. h. bei Betrachtung längs der optischen Achse. Nur dann sind die ersten und zweiten Intensitätsverteilungen direkt miteinander vergleichbar. Vorzugsweise sind die Detektionshilfsapertur(en) des Hilfsdetektors und die Emissionshilfsapertur(en) der Lichtquelle paarweise nicht nur konzentrisch, sondern auch deckungsgleich. Um dies zu erreichen, kann mindestens ein photoelektrisches Bauteil sowohl als Teil der Hilfslichtquelle als auch ein Teil des Hilfsdetektors verwendet werden. Dieses photoelektrische Bauteil kann beispielsweise eine Leuchtdiode, eine Superlumineszenzdiode, eine Laserdiode oder eine Photodiode sein. Alternativ können die Detektionshilfsapertur(en) des Hilfsdetektors und/oder die Emissionshilfsapertur(en) der Hilfslichtquelle mit mindestens einem Endquerschnitt eines Lichtleiters ausgebildet werden. Dieser Lichtleiter kann dann zu der Hilfslichtquelle einerseits und dem Hilfsdetektor andererseits verzweigt sein. Diese Verzweigung kann beispielsweise mit einem Freistrahl-Strahlteiler, einem Faserstrahlteiler oder einem Zirkulator realisiert werden.

In einer bevorzugten Ausführungsform sind die Detektionshilfsaperturen des Hilfsdetektors und/oder die Emissionshilfsaperturen der Hilfslichtquelle mit Löchern in verschiedenen Schichten eines Schichtaufbaus oder in verschiedenen Tiefen einer Platte ausgebildet. Auf einer Rückseite des Schichtaufbaus oder der Platte kann der Strahlengang zu der Hilfslichtquelle und dem Hilfsdetektor verzweigt sein.

Die scannende und entscannende Mikroskopbaugruppe kann weiterhin eine zweites Beleuchtungslicht bereitstellende zweite Lichtquelle aufweisen, wobei die fokussierende Optik das zweite Beleuchtungslicht längs der optischen Achse in den Fokusbereich fokussiert. Wenn dann durch Verstellen des Scanners mit dem fokussierten zweiten Beleuchtungslicht die Detektionshilfsapertur oder die mehreren Detektionshilfsaperturen des Hilfsdetektors in den mehreren Detektionshilfsaperturstellungen abgetastet wird oder werden, wobei weitere erste Intensitätsverteilungen des von dem Hilfsdetektor registrierten zweiten Beleuchtungslichts über die verschiedenen Stellungen des Scanners hinweg erfasst werden, kann aus Unterschieden zwischen den weiteren ersten Intensitätsverteilungen eine weitere Fokuslage eines Fokus des fokussierten zweiten Beleuchtungslichts der zweiten Lichtquelle in dem Fokusbereich in Richtung der optischen Achse erfasst werden. So kann die axiale Konfokalität der scannenden und entscannenden Mikroskopbaugruppe auch in Bezug auf das zweite Beleuchtungslicht überprüft werden. Bei diesem zweiten Beleuchtungslicht kann es sich beispielsweise um Fluoreszenzverhinderungslicht, spezieller um sogenanntes STED-Licht handeln.

Alternativ können die weiteren ersten Intensitätsverteilungen erfasst werden, indem eine konzentrisch zu einer zweiten Emissionsapertur der zweiten Lichtquelle angeordnete zweite weitere Detektionshilfsapertur eines zweiten weiteren Hilfsdetektors durch Verstellen des Scanners mit dem Hilfslicht, das durch die Emissionshilfsapertur oder die mehreren Emissionshilfsaperturen der Hilfslichtquelle in den mehreren Emissionshilfsaperturstellungen austritt, abgetastet wird. Dann sind die weiteren ersten Intensitätsverteilungen solche des Hilfslichts und werden von dem separaten zweiten Hilfsdetektor über die verschiedenen Stellungen des Scanners hinweg erfasst.

Die scannende und entscannende Mikroskopbaugruppe kann weiterhin einen zweites Licht aus dem Fokusbereich detektierenden zweiten Detektor aufweisen, der eine zweite Detektionsapertur aufweist. Dieses zweite Licht kann bei der üblichen Verwendung der scannenden und entscannenden Mikroskopbaugruppe beispielsweise eine andere Wellenlänge aufweisen und von anderen Emittern stammen als das erste Licht. Zur Überprüfung der Konfokalität der scannenden und entscannenden Mikroskopbaugruppe auch bezüglich des zweiten Detektors kann die zweite Detektionsapertur des zweiten Detektors durch Verstellen des Scanners mit dem Hilfslicht, das durch die Emissionshilfsapertur oder die mehreren Emissionshilfsaperturen der Hilfslichtquelle in den mehreren Emissionshilfsaperturstellungen austritt, abgetastet werden, wobei weitere zweite Intensitätsverteilungen des von dem zweiten Detektor registrierten Hilfslichts über die Stellungen des Scanners hinweg erfasst werden. Aus Unterschieden zwischen den weiteren zweiten Intensitätsverteilungen kann dann eine weitere Bildlage eines Bilds der zweiten Detektionsapertur des zweiten Detektors in dem Fokusbereich in Richtung der optischen Achse erfasst werden, die Rückschlüsse auf die axiale Konfokalität zulässt.

Alternativ können die weiteren zweiten Intensitätsverteilungen erfasst werden, indem durch Verstellen des Scanners mit zweitem weiterem Hilfslicht, das durch eine konzentrisch zu der zweiten Detektionsapertur angeordnete zweite weitere Emissionshilfsapertur einer zweiten weiteren Hilfslichtquelle austritt, die Detektionshilfsapertur oder die mehreren Detektionshilfsaperturen des Hilfsdetektors in den mehreren Detektionshilfsaperturstellungen abgetastet wird oder werden. Dabei sind die weiteren zweiten Intensitätsverteilungen solche des zweiten weiteren Hilfslichts und werden mit dem Hilfsdetektor über die Stellungen des Scanners hinweg erfasst.

Die erfindungsgemäße scannende und entscannende Mikroskopbaugruppe weist neben der ersten Lichtquelle, der fokussierenden Optik, dem ersten Detektor und dem Scanner den bereits oben definierten Hilfsdetektor und/oder die bereits oben definierte Hilfslichtquelle sowie eine Überprüfungsvorrichtung auf, die dazu ausgebildet ist, die ersten und zweiten Intensitätsverteilungen zu erfassen. Der Vergleich der Intensitätsverteilungen kann ebenfalls von der Überprüfungsvorrichtung durchgeführt werden. Darüber hinaus kann die Überprüfungsvorrichtung dazu ausgebildet sein, Abweichungen der Fokuslage von einer Sollfokuslage und der Bildlage von einer Sollbildlage nicht nur zu erfassen, sondern auch durch reale und/oder virtuelle Relativverlagerungen der ersten Detektionsapertur des ersten Detektors gegenüber der ersten Lichtquelle zu kompensieren. Die Sollfokuslage und die Sollbildlage werden vorzugsweise wieder so festgelegt, dass die Fokuslage des Fokus des fokussierten ersten Beleuchtungslichts der ersten Lichtquelle und die Bildlage des Bilds der ersten Detektionsapertur des Detektors in einem Objektfokusbereich auf einer Objektseite eines Objektivs eines die erfindungsgemäße scannende und entscannende Mikroskopbaugruppe umfassenden Laserscanningmikroskops in Richtung der optischen Achse zusammenfallen, um die axiale Konfokalität herzustellen.

Zur Herstellung der lateralen Konfokalität kann die Überprüfungsvorrichtung die Lehre der WO 2020/254303 A1 anwenden.

Ein erfindungsgemäßes Laserscanningmikroskop weist neben der erfindungsgemäßen Mikroskopbaugruppe ein Objektiv auf, wobei die Detektionshilfsaperturstellungen und/oder die Emissionshilfsaperturstellungen um eine Zwischenbildebene herum angeordnet sind. Diese Zwischenbildebene kann eine Zwischenbildebene eines die scannende und entscannende Mikroskopbaugruppe und das Objektiv umfassenden Mikroskopstrahlengangs sein oder in einem Abzweig von einem Hauptstrahlengang eines solchen Mikroskopstrahlengangs liegen.

Eine erfindungsgemäße Hilfsvorrichtung zur Überprüfung der Konfokalität einer scannenden und entscannenden Mikroskopbaugruppe weist einen Anschluss auf, der zum Anschluss in definierter Relativlage an die scannende und entscannende Mikroskopbaugruppe ausgebildet ist. In fester Orientierung zu dem Anschluss verläuft die optische Achse, längs der die Detektionshilfsaperturstellungen und die Emissionshilfsaperturstellungen des bereits oben definierten Hilfsdetektors bzw. der bereits oben definierten Hilfslichtquelle als Teile der Hilfsvorrichtung angeordnet sind. Der Hilfsdetektor und die Hilfslichtquelle können im Detail so ausgestaltet sein, wie bereits oben erläutert wurde. Der Anschluss der Hilfsvorrichtung kann ein genormter Anschluss sein und beispielsweise an einen Objektivanschluss der scannenden und entscannenden Mikroskopbaugruppe passen.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Linse die Rede ist, ist dies so zu verstehen, dass genau eine Linse, zwei Linsen oder mehr Linsen vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein erfindungsgemäßes Laserscanningmikroskop mit einer erfindungsgemäßen Mikroskopbaugruppe.
- **Fig. 2**: zeigt eine erste Ausführungsform einer Hilfsvorrichtung des Laserscanningmikroskops gemäß Fig. 1.
- **Fig. 3**: zeigt eine zweite Ausführungsform der Hilfsvorrichtung des Laserscanningmikroskops gemäß Fig. 1.
- **Fig. 4**: illustriert eine Kombination eines ersten Detektors und einer ersten weiteren Hilfslichtquelle bei einer Abwandlung des Laserscanningmikroskops gemäß Fig. 1.
- **Fig. 5**: illustriert die Kombination einer ersten Lichtquelle und eines ersten weiteren Hilfsdetektors bei einer anderen Abwandlung des Laserscanningmikroskops gemäß Fig. 1.
- **Fig. 6**: zeigt eine konkrete Ausführungsform einer erfindungsgemäßen Hilfsvorrichtung zum Einsatz bei dem Laserscanningmikroskop gemäß Fig. 1.
- **Fig. 7**: zeigt ein Detail der Hilfsvorrichtung gemäß Fig. 6.
- **Fig. 8**: zeigt eine alternative Ausführung des Details gemäß Fig. 7; und
- **Fig. 9**: zeigt eine weitere alternative Ausführung des Details gemäß Fig. 7.

### FIGURENBESCHREIBUNG

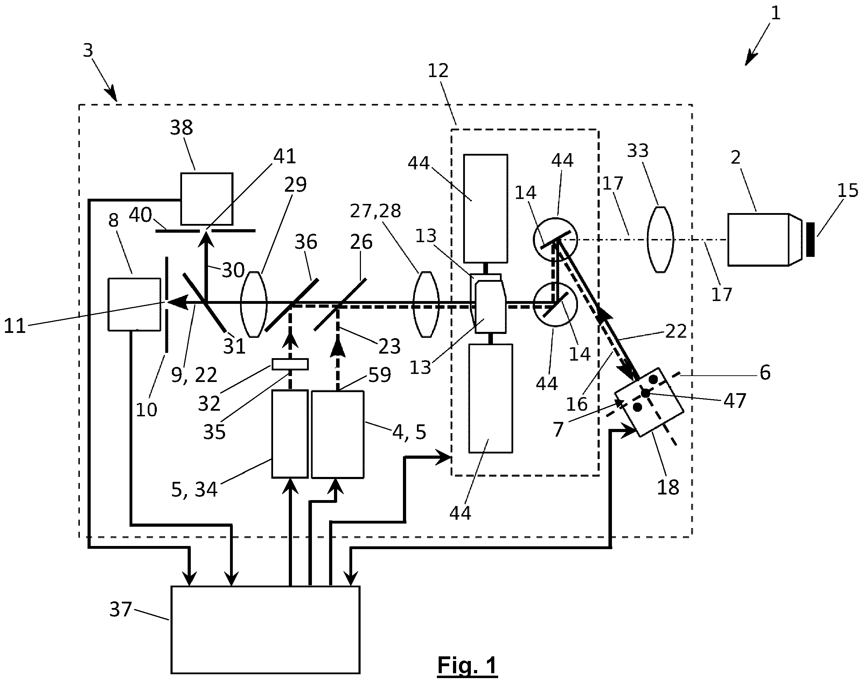

Das in **Fig. 1** schematisch dargestellte Laserscanningmikroskop 1 umfasst ein Objektiv 2 und eine Mikroskopbaugruppe 3, deren Bestandteile mit einer gestrichelten Linie umrandet sind. Zu der Mikroskopbaugruppe 3 gehört eine erste Lichtquelle 4, insbesondere in Form eines Lasers 5, zur Bereitstellung von erstem Beleuchtungslicht 23. Weiterhin gehört zu der Mikroskopbaugruppe 3 eine das Beleuchtungslicht 23 in einen Fokus 47 in einem Fokusbereich 7 um eine Fokusebene 6 fokussierende Optik 27. In Fig. 1 ist die Fokusebene 6 mit einer gestrichelten Linie eingezeichnet. Als Bestandteil der fokussierenden Optik 27 ist in Fig. 1 nur Linse 28 wiedergegeben. Daneben gehört zu der Mikroskopbaugruppe 3 ein Detektor 8 für erstes Licht 9 aus dem Fokusbereich 7. Vor dem eigentlichen Detektor 8, d. h. dessen lichtempfindlichen Bereich, befindet sich eine Lochblende 10 und eine weitere Optik 29, die das von dem Detektor 8 zu detektierende Licht 9 auf die Öffnung der Lochblende 10 fokussiert. Die Öffnung der Lochblende 10 definiert eine Detektionsapertur 11 des Detektors 8, die bei korrekter Justierung der Mikroskopbaugruppe 3 konfokal zu dem Fokus 47 in dem Fokusbereich 7 angeordnet ist. Zwischen der Lichtquelle 4 und dem Detektor 8 mit der Lochblende 10 einerseits und der Fokusebene 6 andererseits ist ein Scanner 12 der Mikroskopbaugruppe 3 angeordnet. Die Linse 28 der Optik 27 befindet sich auf der der Lichtquelle 4 und dem Detektor 8 zugewandten Seite des Scanners 12. Der Scanner 12 umfasst zwei Drehspiegel 13, 14 je lateraler Richtung, in der der Scanner 12 zum Abtasten einer vor dem Objektiv 2 angeordneten Probe 15 mit dem Beleuchtungslicht 23 von der Lichtquelle 4 vorgesehen ist. Jedem Drehspiegel 13, 14 ist ein Drehantrieb 44 zugeordnet. Der Scanner 12 dient nicht nur zum Scannen der Probe 15 mit dem Beleuchtungslicht 23, sondern auch zum Entscannen des Lichts 9, das von dem Beleuchtungslicht 23 in der Probe 15 hervorgerufen wird, damit dieses Licht räumlich selektiv von dem Detektor 8 erfasst wird. Dabei kommt es auf eine genaue Konfokalität der Mikroskopbaugruppe 3, d. h. ein genaues Zusammenfallen des Fokus des in die Probe 15 fokussierten Beleuchtungslichts 23 und einer Abbildung der Detektionsapertur 11 des Detektors 8 in die Probe 15 an. Diese Konfokalität wird in der in Fig. 1 eingezeichneten Fokusebene 6 überprüft. Diese Fokusebene 6 liegt in einem Abzweig 16 von dem Hauptstrahlengang 17 des Laserscanningmikroskops 1 und entspricht einer Zwischenbildebene in dem Hauptstrahlengang 17. In dem Hauptstrahlengang 17 ist zwischen dem Scanner 12 und dem Objektiv 2 eine Tubuslinse 33 angeordnet. Der Abzweig 16 zweigt von dem Hauptstrahlengang 17 an dem letzten Drehspiegel 14 des Scanners 12 vor dem Objektiv 2 ab. Wenn der Abzweig über diesen letzten Drehspiegel 14 aktiviert wird, sind die anderen Drehspiegel 13, 14 zum Abscannen einer in dem Abzweig 16 angeordneten Hilfsvorrichtung 18 verwendbar. Die Hilfsvorrichtung 18 befindet sich gegenüber den weiteren Bestandteilen der Mikroskopbaugruppe 3 an einer ortsfesten Position um die Fokusebene 6 und ist durch Ansteuern des Scanners 12 mit dem Beleuchtungslicht 23 erreichbar.

Der Strahlengang des ersten Beleuchtungslichts 23 von der ersten Lichtquelle 4 und des Strahlengangs des mit dem ersten Detektor 8 zu detektierenden ersten Lichts 9 werden mit Hilfe eines Strahlteilers 26 getrennt. Ein weiterer Strahlteiler 36 trennt den Strahlengang von zweitem Beleuchtungslicht 35 von einer zweiten Lichtquelle 34, die ebenfalls typischerweise als Laser 5 ausgebildet ist, von dem Strahlengang des Lichts 9. In dem Strahlengang des zweiten Lichts 35 ist ein Strahlformer 32 angeordnet. Der Strahlformer 32 kann dazu vorgesehen sein, dass eine Intensitätsverteilung des zweiten Beleuchtungslichts 35 mit einem zentralen Intensitätsminimum in dem Fokusbereich 7 ausgebildet wird, wie dies für Fluoreszenzverhinderungslicht, insbesondere STED-Licht zur Auflösungsverbesserung üblich ist. Ein weiterer Strahlteiler 31 trennt einen Strahlengang von zu detektierendem zweitem Licht 30 von dem Strahlengang des zu detektierenden ersten Lichts 9, wobei sich das erste Licht 9 und das zweite Licht 30 insbesondere durch ihre Wellenlänge unterscheiden können. Das zweite Licht 30 wird von einem zweiten Detektor 38 detektiert, dessen zweite Detektionsapertur 41 durch eine weitere Lochblende 40 definiert ist.

Weiterhin ist in Fig. 1 eine Prüfvorrichtung 37 schematisch dargestellt, die an die Lichtquellen 4, 34, die Detektoren 8, 38, den Scanner 12 und die Hilfsvorrichtung 18 angeschlossen ist und mit Hilfe dieser Anschlüsse die Überprüfung der Konfokalität der scannenden und entscannenden Mikroskopbaugruppe 3 durchführt.

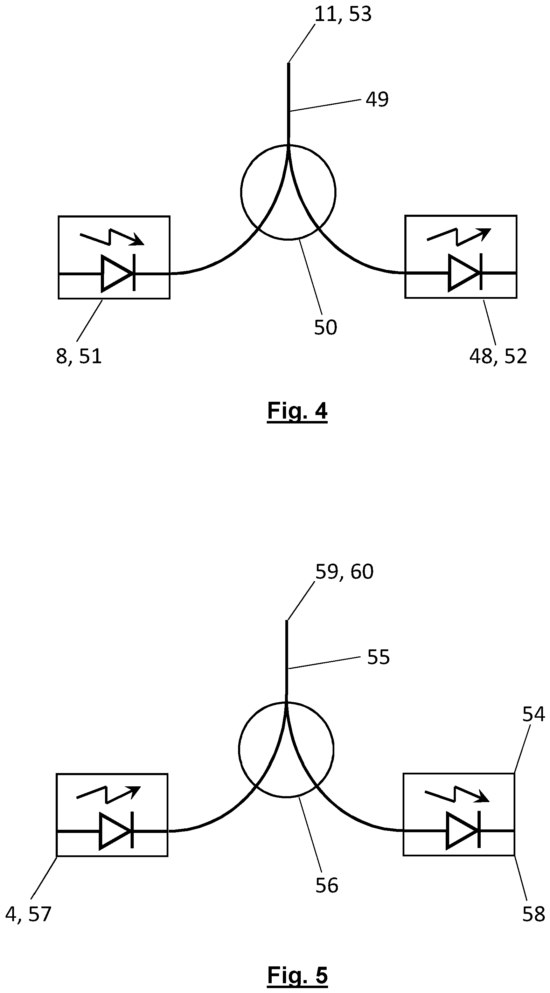

Bis auf die zusätzliche zweite Lichtquelle 34, den zusätzlichen zweiten Detektors 38, die Wiedergabe der Prüfvorrichtung 37 und die nur schematische Darstellung der Hilfsvorrichtung 18 entspricht Fig. 1 der Fig. 5 der WO 2020/254303 A1. Auch die anderen Ausführungsformen der in der WO 2020/254303 A1 offenbarten scannenden und entscannenden Mikroskopbaugruppe 3 und eines der damit aufgebauten Laserscanningmikroskops 1 können mit einer Hilfsvorrichtung 18 aufgerüstet und verwendet werden, wie sie im Folgenden näher erläutert werden wird. Insoweit wird auf die Offenbarung von scannenden und entscannenden Mikroskopbaugruppen 3 und Laserscanningmikroskopen 1 in der WO 2020/254303 A1 Bezug genommen.

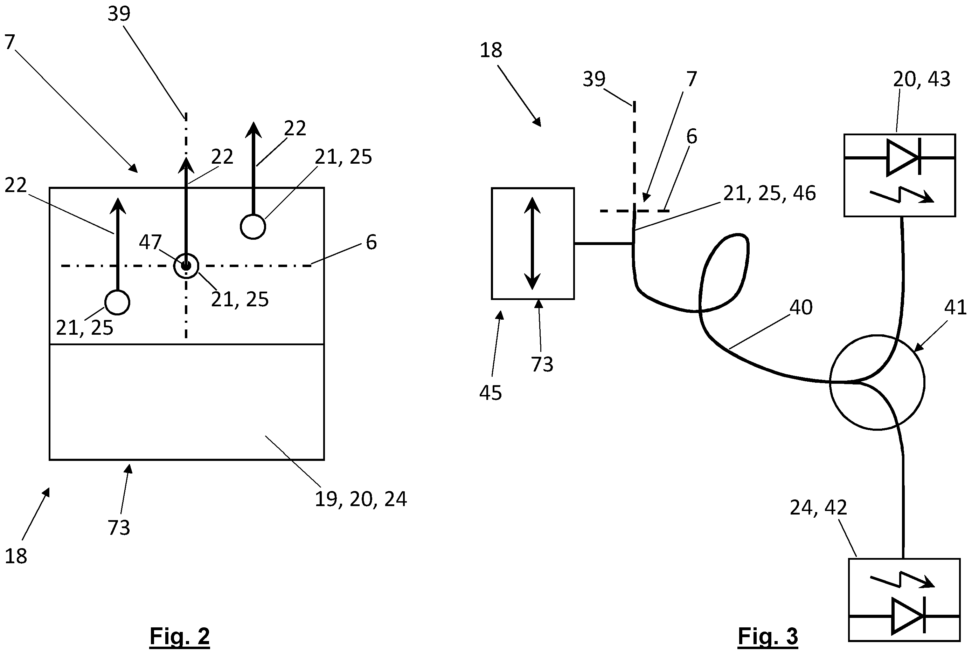

**Fig. 2** illustriert schematisch eine Ausführungsform der Hilfsvorrichtung 18. Eingezeichnet sind die Fokusebene 6 und der Fokusbereich 7 sowie eine optische Achse 39 des Abzweigs 16, längs der das Beleuchtungslicht 23 auf die Hilfsvorrichtung 18 einfällt. Die Hilfsvorrichtung 18 weist hier ein photoelektrisches Bauteil 19 auf, das sowohl als Hilfslichtquelle 20 als auch als Hilfsdetektor 24 nutzbar ist. Dabei sind mit in Fig. 2 nicht genauer dargestellten Blenden drei Paare von deckungsgleichen Emissionshilfsaperturen 21 der Hilfslichtquelle 20 und Detektionshilfsaperturen 25 des Hilfsdetektors 24 ausgebildet. Die Emissionshilfsaperturen 21 und die Detektionshilfsaperturen 25 sind in Richtung der optischen Achse 39 und lateral dazu voneinander beabstandet. Ein in Fig. 2 nicht näher spezifizierter Anschluss 73 dient zum Anschließen der Hilfsvorrichtung 18 in definierter Relativlage an die weiteren Bestandteile der Mikroskopbaugruppe 3.

Nach einem ersten Schritt A, in dem die Emissionshilfsaperturen 21 und die Detektionshilfsaperturen 25 in den axial und lateral untereinander beabstandeten Emissions- und Detektionshilfsaperturstellungen in dem Fokusbereich 7 angeordnet werden, werden in einem nachfolgenden Schritt B durch Verstellen des Scanners 12 die Detektionshilfsaperturen 25 des Hilfsdetektors 24 mit dem fokussierten ersten Beleuchtungslicht 23 abgetastet, um erste Intensitätsverteilungen des von dem Hilfsdetektor 24 registrierten ersten Beleuchtungslichts 23 über verschiedene Stellungen des Scanners 12 hinweg zu erfassen.

Dann wird in einem nachfolgenden Schritt C das photoelektrische Bauteil 19 als Hilfslichtquelle 20 aktiviert und mit dem aus den Emissionshilfsaperturen 21 austretendem Hilfslicht 22 wird unter Verstellen des Scanners 12 die erste Detektionsapertur 11 des ersten Detektors 8 abgetastet. Dabei werden zweite Intensitätsverteilungen des von dem ersten Detektor 8 registrierten Hilfslichts 22 über die Stellung des Scanners 12 hinweg erfasst. Bei einem anschließenden Vergleichen der Lichtintensitätsverteilungen in einem Schritt D wird aus Unterschieden zwischen den ersten Intensitätsverteilungen eine Fokuslage des Fokus 47 des fokussierten ersten Beleuchtungslichts 23 der ersten Lichtquelle 4 in dem Fokusbereich 7 in Richtung der optischen Achse 39 erfasst. Aus Unterschieden zwischen den zweiten Intensitätsverteilungen wird eine Bildlage eines Bilds der ersten Detektionsapertur 11 des ersten Detektors 8 in dem Fokusbereich 7 in Richtung der optischen Achse 39 erfasst. Bei den Unterschieden kommt es jeweils insbesondere auf die Flächen der Intensitätsverteilungen an. Aus der bestimmten Fokuslage und der bestimmten Bildlage lassen sich Rückschlüsse auf die axiale Konfokalität der Mikroskopbaugruppe 3 ziehen, wobei die Fokuslage und die Bildlage nicht an der Hilfsvorrichtung 18 zusammenfallen müssen, sondern in der Probe 15. Aufgrund wellenlängenabhängiger Eigenschaften des Objektivs 2 und unterschiedlicher Wellenlängen des Beleuchtungslichts 23 und des Hilfslichts 22 kann dies erfordern, dass die Fokuslage und die Bildlage in dem Fokusbereich 7 an der Hilfsvorrichtung 18 in Richtung der optischen Achse 39 beabstandete Sollfokus- bzw. Sollbildlagen einnehmen. Durch einen Vergleich der ersten und zweiten Intensitätsverteilungen, insbesondere in den zu jeweils zu einem Paar von Emissionshilfsapertur 21 und Detektionshilfsapertur 25 zugehörigen Paaren wird die laterale Konfokalität der Mikroskopbaugruppe 3 überprüft. Diese ist dann erreicht, wenn Maxima, Mittel- oder Schwerpunkte der ersten und zweiten Lichtintensitätsverteilungen längs der Fokusebene 6 in dem Fokusbereich 7 zusammenfallen.

**Fig. 3** zeigt eine alternative Ausführungsform der Hilfsvorrichtung 18 mit nur einer Emissionshilfsapertur 21 und damit zusammenfallenden Detektionshilfsapertur 25 in dem Fokusbereich 7 um die Fokusebene 6. Gebildet werden beide Aperturen 21, 25 durch einen Endquerschnitt 46 eines Lichtleiters 40. Der Lichtleiter 40 verzweigt über einen Zirkulator 41 zu einer als Hilfsdetektor 24 dienenden Photodiode 42 und einer als Hilfslichtquelle 20 dienenden Laserdiode 43. Mit Hilfe einer Verfahreinrichtung 45, an der der auch in Fig. 3 nicht näher spezifizierte Anschluss 73 vorgesehen ist, ist der Endquerschnitt 46 in verschiedene Emissionshilfsaperturstellungen bzw. Detektionshilfsaperturstellungen verfahrbar. In jeder dieser Stellungen können dann mit Hilfe des Scanners 12 gemäß Fig. 1 eine erste Lichtintensitätsverteilung und eine zweite Lichtintensitätsverteilung erfasst werden. Die Verfahreinrichtung 45 kann speziell dazu ausgebildet sein, den Endquerschnitt 46 in eine bestimmte Anzahl diskreter Emissionshilfsaperturstellungen bzw. Detektionshilfsaperturstellungen zu verfahren, beispielsweise in drei solcher diskreter Stellungen. Der Zirkulator gemäß Fig. 3 ist nur ein Beispiel für einen Strahlteiler, um den Lichtleiter 40 zu dem Hilfsdetektor 24 und der Hilfslichtquelle 20 zu verzweigen.

Anstatt sowohl einen Hilfsdetektor 24 als auch eine Hilfslichtquelle 20 in der Hilfsvorrichtung 18 vorzusehen, kann diese auch nur als Hilfsdetektor 24 mit mehreren Detektionshilfsaperturen 25 ausgebildet werden. Dann kann zum Erfassen der zweiten Intensitätsverteilungen der erste Detektor 8 und ggf. auch der zweite Detektor 38 mit einer weiteren Hilfslichtquelle 48 kombiniert sein, wie dies in **Fig. 4** skizziert ist. Die erste Detektionsapertur 11 wird durch einen Lichtleiter 49 gebildet, der über einen Zirkulator 50 zu einer als der Detektor 8 dienenden Photodiode 51 und einer als die weitere Hilfslichtquelle 48 dienenden Laserdiode 52 verzweigt. Die weitere Emissionshilfsapertur 53 der weiteren Hilfslichtquelle 48 ist identisch mit der ersten Detektionsapertur 11 des ersten Detektors 8. Mit aus der weiteren Emissionshilfsapertur 53 austretendem weiteren Licht von der weiteren Hilfslichtquelle 48 können die Detektionshilfsaperturen 25 oder kann die verfahrbare Detektionshilfsapertur 25 in den verschiedenen Detektionshilfsaperturstellungen abgetastet werden, um die zweiten Intensitätsverteilungen mit dem Hilfsdetektor 24 zu erfassen.

Entsprechend kann die Hilfsvorrichtung 18 alternativ nur eine Hilfslichtquelle 20 mit mehreren Emissionshilfsaperturstellungen ihrer Emissionshilfsapertur(en) 21 aufweisen. Dann kann zum Erfassen der ersten Intensitätsverteilungen die erste Lichtquelle 4 und entsprechend auch die zweite Lichtquelle 34 mit einem weiteren Hilfsdetektor 54 kombiniert sein, wie dies in **Fig. 5** illustriert ist. Der freie Endquerschnitt eines Lichtleiters 55, der über einen Zirkulator 56 zu einer als die erste Lichtquelle 4 dienenden Laserdiode 57 und einer als der weitere Hilfsdetektor 54 dienenden Photodiode 58 verzweigt, bildet sowohl eine erste Emissionsapertur 59 der ersten Lichtquelle 4 als auch eine weitere Detektionshilfsapertur 60 des weiteren Hilfsdetektors 54 aus. Zum Erfassen der ersten Intensitätsverteilungen mit dem weiteren Hilfsdetektor 54 wird diese weitere Detektionshilfsapertur 60 mit Hilfslicht aus den Emissionshilfsaperturen 21 bzw. der Emissionshilfsapertur 21 in den verschiedenen Emissionshilfsaperturstellungen der Hilfslichtquelle 20 abgetastet. Auch in den Fig. 4 und 5 sind der Lichtleiter 59 bzw. 55 und dessen Verzweigung zu den Photodioden 51 bzw. 58 und den Laserdioden 52 bzw. 57 nur beispielhaft. Dem Fachmann sind weitere Realisierungsmöglichkeiten des Detektors 8 und der weiteren Hilfslichtquelle 48 mit übereinstimmender Detektionsapertur 11 und weiterer Emissionshilfsapertur 53 oder der Lichtquelle 4 und des weiteren Hilfsdetektors 54 mit übereinstimmender Emissionsapertur 59 und weiterer Detektionshilfsapertur 60 ohne erfinderisches Zutun zugänglich.

Bezüglich der Richtung des abgestrahlten oder registrierten Lichts sind die Dioden 42, 43, 51, 52, 57 und 58 in den Figuren 3 bis 5 nicht mit den üblichen, sondern mit selbst gewählten Symbolen dargestellt.

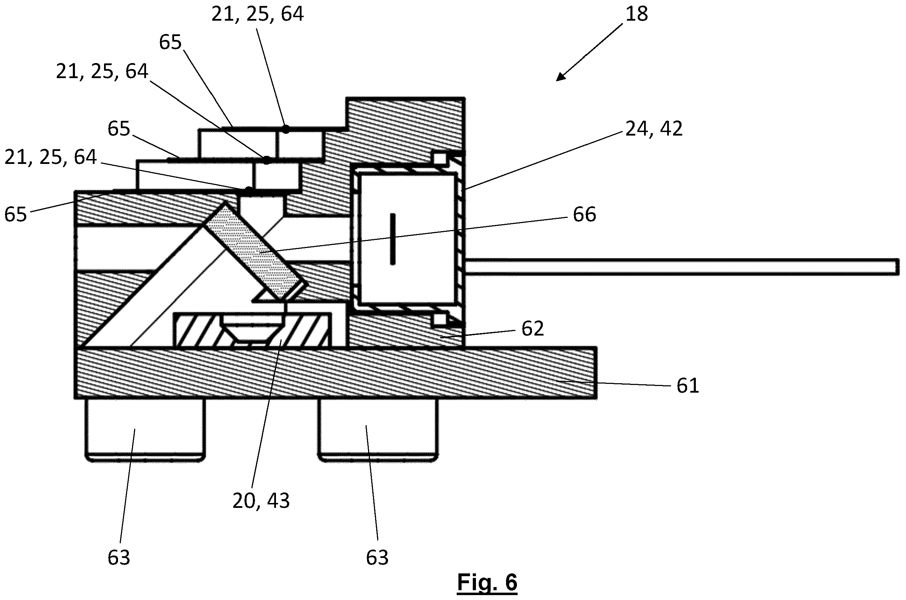

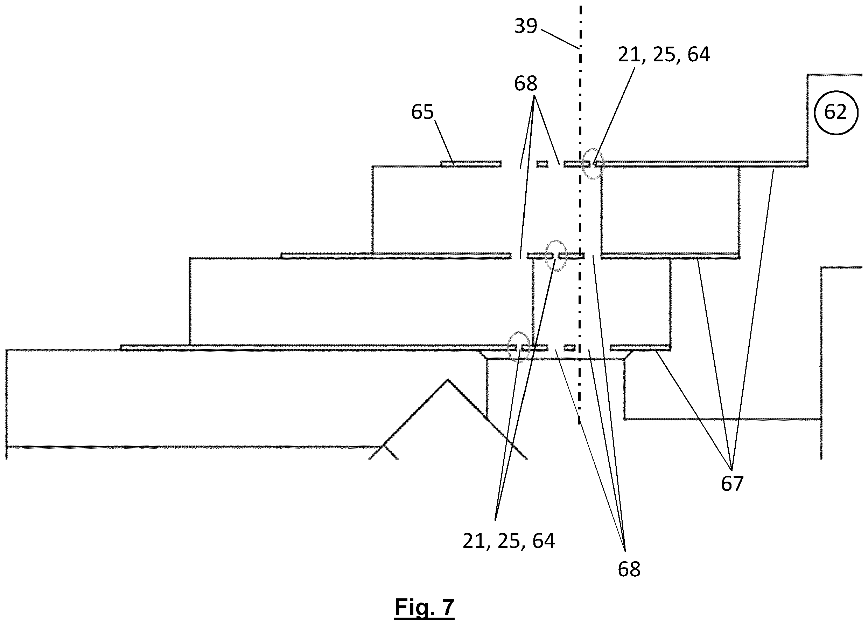

Bei der in **Fig. 6** dargestellten konkreten Ausführungsform der Hilfsvorrichtung 18 sind verschiedene optische Komponenten auf einer als Anschluss 73 dienenden Grundplatte 61 und in einem Grundkörper 62 angeordnet, die mit Schrauben 63 verschraubt sind. Die Emissionshilfsaperturen 21 und Detektionshilfsaperturen 25 sind paarweise durch Löcher 64 in Folien 65 ausgebildet, wie im Zusammenhang mit **Fig. 7** noch näher erläutert werden wird. Hinter den Löchern 64 verzweigt ein Strahlteiler 66 den Strahlengang zu der als Hilfsdetektor 24 dienenden Photodiode 42 und der als Hilfslichtquelle 20 dienenden Laserdiode 43. Der Strahlteiler 66 ist hier als 50/50 Strahlteiler ausgebildet.

**Fig. 7** zeigt, wie in den drei in Abständen längs der optischen Achse 39 zwischen Randbereichen 67 des Grundkörpers 63 aufgespannten Folien 65 die die Emissionshilfsaperturen 21 und die Detektionshilfsaperturen 25 ausbildenden Löcher 64 vorgesehen sind. In jeder der Folien 65 ist genau ein solches Loch 64 vorgesehen. Die Löcher 64 sind lateral zu der optischen Achse 39 beabstandet. Längs der optischen Achse 39 mit den Löchern 64 fluchtend sind in die jeweils anderen Folien 65 größere Löcher 68 eingebracht, die keinen Einfluss auf die jeweilige Emissionshilfsapertur 21 bzw. Detektionshilfsapertur 25 haben.

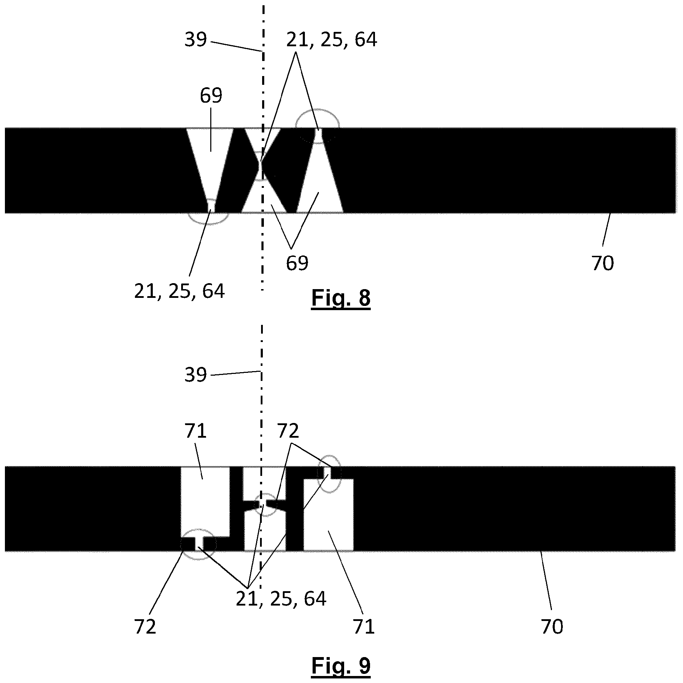

**Fig. 8** zeigt eine alternative Ausbildung der Löcher 64 an unterschiedlichen Emissions- bzw. Detektionshilfsaperturstellungen längs und quer zu der optischen Achse 39. Hier sind die Löcher 64 die Bereiche kleinsten Durchmessers von konischen bzw. doppelkonischen Bohrungen 69 in einer Platte 70.

Bei der Ausführung der Emissionshilfsaperturen 21 und der Detektionshilfsaperturen 25 durch die Löcher 64 gemäß **Fig. 9** sind Sackbohrungen 71 in die Platte 70 eingebracht, bis diese auf dünne Reste 72 entfernt wurde, die sich in unterschiedlichen Positionen längs der optischen Achse 39 und quer dazu befinden. In diese dünnen Reste 72 ist dann jeweils eines der Löcher 64 zentral eingebracht.

### BEZUGSZEICHENLISTE

- 1: Laserscanningmikroskop
- 2: Objektiv
- 3: Mikroskopbaugruppe
- 4: Erste Lichtquelle
- 5: Laser
- 6: Fokusebene
- 7: Fokusbereich
- 8: Erster Detektor
- 9: Erstes Licht
- 10: Lochblende
- 11: Erste Detektionsapertur
- 12: Scanner
- 13: Drehspiegel
- 14: Drehspiegel
- 15: Probe
- 16: Abzweig
- 17: Hauptstrahlengang
- 18: Hilfsvorrichtung
- 19: Photoelektrisches Bauteil
- 20: Hilfslichtquelle
- 21: Emissionshilfsapertur
- 22: Hilfslicht
- 23: Erstes Beleuchtungslicht
- 24: Hilfsdetektor
- 25: Detektionshilfsapertur
- 26: Strahlteiler
- 27: Optik
- 28: Linse
- 29: Weitere Optik
- 30: Zweites Licht
- 31: Strahlteiler
- 32: Strahlformer
- 33: Tubuslinse
- 34: Zweite Lichtquelle
- 35: Zweites Beleuchtungslicht
- 36: Strahlteiler
- 37: Prüfvorrichtung
- 38: Zweiter Detektor
- 39: Optische Achse
- 40: Lichtleiter
- 41: Zirkulator
- 42: Photodiode
- 43: Laserdiode
- 44: Drehantrieb
- 45: Verfahreinrichtung
- 46: Endquerschnitt
- 47: Fokus
- 48: Weitere Hilfslichtquelle
- 49: Lichtleiter
- 50: Zirkulator
- 51: Photodiode
- 52: Laserdiode
- 53: Weitere Emissionshilfsapertur
- 54: Weiterer Hilfsdetektor
- 55: Lichtleiter
- 56: Zirkulator
- 57: Laserdiode
- 58: Photodiode
- 59: Erste Emissionsapertur
- 60: Weitere Detektionshilfsapertur
- 61: Grundplatte
- 62: Grundkörper
- 63: Schraube
- 64: Loch
- 65: Folie
- 66: Strahlteiler
- 67: Randbereich
- 68: Loch
- 69: Konische Bohrung
- 70: Lochplatte
- 71: Sackbohrung
- 72: Dünner Rest
- 73: Anschluss

## Patentansprüche

1. Scannende und entscannende Mikroskopbaugruppe (3) mit
(a) einer erstes Beleuchtungslicht (23) bereitstellenden ersten Lichtquelle (4),
(b) einer das erste Beleuchtungslicht (23) längs einer optischen Achse (39) in einen Fokusbereich (7) fokussierenden Optik (27),
(c) einem erstes Licht aus dem Fokusbereich (7) detektierenden ersten Detektor (8), der eine erste Detektionsapertur (11) aufweist,
(d) einem lateral zu der optischen Achse (39) scannenden Scanner (12), der zwischen der ersten Lichtquelle (4) und dem ersten Detektor (8) einerseits und dem Fokusbereich (7) andererseits angeordnet ist,
(A) einem in dem Fokusbereich (7) angeordneten oder anordbaren Hilfsdetektor (24) mit
- einer in mehrere in Richtung der optischen Achse (39) voneinander beabstandete Detektionshilfsaperturstellungen verfahrbaren Detektionshilfsapertur (25) oder
- mehreren Detektionshilfsaperturen (25) in mehreren, in Richtung der optischen Achse (39) und lateral zu der optischen Achse (39) voneinander beabstandeten Detektionshilfsaperturstellungen
und/oder einer in dem Fokusbereich (7) angeordneten oder anordbaren und Hilfslicht (22) bereitstellenden Hilfslichtquelle (20) mit
- einer in mehrere in Richtung der optischen Achse (39) voneinander beabstandete Emissionshilfsaperturstellungen verfahrbaren Emissionshilfsapertur (21) oder
- mehreren Emissionshilfsaperturen (21) in mehreren, in Richtung der optischen Achse (39) und lateral zu der optischen Achse (39) voneinander beabstandeten Emissionshilfsaperturstellungen,
aus der/denen das Hilfslicht (22) austritt,
wobei dann, wenn der Hilfsdetektor (24) und die Hilfslichtquelle (20) in dem Fokusbereich (7) angeordnet sind, die Detektionshilfsapertur(en) (25) und die Emissionshilfsapertur(en) (21) paarweise konzentrisch angeordnet sind,
und einer Überprüfungsvorrichtung (37),
(B) wobei die Überprüfungsvorrichtung (37) dazu ausgebildet ist, durch Verstellen des Scanners (12) mit dem fokussierten ersten Beleuchtungslicht (23) die Detektionshilfsapertur (25) oder die mehreren Detektionshilfsaperturen (25) des Hilfsdetektors (24) in den mehreren Detektionshilfsaperturstellungen abzutasten, wobei die Überprüfungsvorrichtung (37) erste Intensitätsverteilungen des von dem Hilfsdetektor (24) registrierten ersten Beleuchtungslichts (23) über verschiedene Stellungen des Scanners (12) hinweg erfasst, oder ein erster weiterer Hilfsdetektor (54) mit einer konzentrisch zu einer ersten Emissionsapertur (59) der ersten Lichtquelle (4) angeordneten ersten Detektionshilfsapertur (60) vorhanden ist und wobei die Überprüfungsvorrichtung (37) dazu ausgebildet ist, durch Verstellen des Scanners (12) mit dem Hilfslicht (22), das durch die Emissionshilfsapertur (21) oder die mehreren Emissionshilfsaperturen der Hilfslichtquelle (20) in den mehreren Emissionshilfsaperturstellungen austritt, die erste Detektionshilfsapertur (60) abzutasten, wobei die Überprüfungsvorrichtung (37) erste Intensitätsverteilungen des von dem ersten weiteren Hilfsdetektor (54) registrierten Hilfslichts (22) über verschiedene Stellungen des Scanners (12) hinweg erfasst, und
(C) wobei die Überprüfungsvorrichtung (37) dazu ausgebildet ist, durch Verstellen des Scanners (12) mit dem Hilfslicht (22), das durch die Emissionshilfsapertur (21) oder die mehreren Emissionshilfsaperturen (21) der Hilfslichtquelle (20) in den mehreren Emissionshilfsaperturstellungen austritt, die erste Detektionsapertur (11) des ersten Detektors (8) abzutasten, wobei die Überprüfungsvorrichtung (37) zweite Intensitätsverteilungen des von dem ersten Detektor (8) registrierten Hilfslichts (22) über die Stellungen des Scanners (12) hinweg erfasst, oder
eine erstes weiteres Hilfslicht bereitstellende erste weitere Hilfslichtquelle (48) mit einer ersten weiteren Emissionshilfsapertur (53), die konzentrisch zu der ersten Detektionsapertur (11) angeordnet ist und aus der das erste weitere Hilfslicht austritt, vorhanden ist und wobei die Überprüfungsvorrichtung (37) dazu ausgebildet ist, durch Verstellen des Scanners (12) mit dem ersten weiteren Hilfslicht, das durch die erste weitere Emissionshilfsapertur (53) austritt, die Detektionshilfsapertur (25) oder die mehreren Detektionshilfsaperturen (25) des Hilfsdetektors (24) in den mehreren Detektionshilfsaperturstellungen abzutasten, wobei die Überprüfungsvorrichtung (37) zweite Intensitätsverteilungen des von dem ersten Hilfsdetektor (24) registrierten ersten weiteren Hilfslichts über die Stellungen des Scanners (12) hinweg erfasst.

2. Mikroskopbaugruppe (3) nach Anspruch 1, **dadurch gekennzeichnet, dass** die Überprüfungsvorrichtung (37) dazu ausgebildet ist, die Intensitätsverteilungen miteinander zu vergleichen und dabei aus Unterschieden zwischen den ersten Intensitätsverteilungen eine Fokuslage eines Fokus (47) des fokussierten ersten Beleuchtungslichts (23) der ersten Lichtquelle (4) in dem Fokusbereich (7) in Richtung der optischen Achse (39) zu erfassen und aus Unterschieden zwischen den zweiten Intensitätsverteilungen eine Bildlage eines Bilds der ersten Detektionsapertur (11) des ersten Detektors (8) in dem Fokusbereich (7) in Richtung der optischen Achse (39) zu erfassen, wobei die Überprüfungsvorrichtung (37) optional dazu ausgebildet ist, Abweichungen der Fokuslage von einer Sollfokuslage und der Bildlage von einer Sollbildlage zu erfassen und durch eine reale und/oder virtuelle Relativverlagerung der ersten Detektionsapertur (11) des ersten Detektors (8) gegenüber der ersten Lichtquelle (4) zu kompensieren.

3. Mikroskopbaugruppe (3) nach einem der Ansprüche 1 und 2, **dadurch gekennzeichnet, dass** die mehreren Detektionshilfsaperturen (25) des Hilfsdetektors (24) und/oder die mehreren Emissionshilfsaperturen (21) der Hilfslichtquelle (20) gleiche Formen und Abmessungen quer zu der optischen Achse (39) aufweisen.

4. Mikroskopbaugruppe (3) nach einem der Ansprüche 1 bis 3, **dadurch gekennzeichnet, dass** die Detektionshilfsapertur(en) (25) des Hilfsdetektors (24) und die Emissionshilfsapertur(en) (21) der Hilfslichtquelle (20) paarweise deckungsgleich sind.

5. Mikroskopbaugruppe (3) nach Anspruch 3 oder 4, **dadurch gekennzeichnet, dass** mindestens ein photoelektrisches Bauteil (19) sowohl Teil der Hilfslichtquelle (20) als auch Teil des Hilfsdetektors (24) ist, wobei das photoelektrische Bauteil (19) optional eine Leuchtdiode, eine Superlumineszenzdiode, eine Laserdiode oder eine Fotodiode ist.

6. Mikroskopbaugruppe (3) nach Anspruch 3 oder 4, **dadurch gekennzeichnet,**
- **dass** die Detektionshilfsapertur(en) (25) des Hilfsdetektors (24) und/oder die Emissionshilfsapertur(en) (21) der Hilfslichtquelle (20) mit mindestens einem Endquerschnitt (39) eines Lichtleiters (40) ausgebildet sind, wobei der Lichtleiter (40) optional über einen Freistrahl-Strahlteiler, einen Faserstrahlteiler oder einen Zirkulator (41) zu der Hilfslichtquelle (20) und dem Hilfsdetektor (24) verzweigt ist, oder
- **dass** die Detektionshilfsaperturen (25) des Hilfsdetektors (24) und/oder die Emissionshilfsaperturen (21) der Hilfslichtquelle (20) mit Löchern (64) in verschiedenen Schichten eines Schichtaufbaus oder in verschiedenen Tiefen einer Platte (70) ausgebildet sind, wobei ein Strahlengang auf einer Rückseite des Schichtaufbaus oder der Platte (70) optional zu der Hilfslichtquelle (20) und dem Hilfsdetektor (24) verzweigt ist.

7. Mikroskopbaugruppe (3) nach einem der Ansprüche 1 bis 6, **dadurch gekennzeichnet,**
- **dass** die scannende und entscannende Mikroskopbaugruppe (3) eine zweites Beleuchtungslicht (35) bereitstellende zweite Lichtquelle (34) aufweist, wobei die fokussierende Optik (27) das zweite Beleuchtungslicht (35) längs der optischen Achse (39) in den Fokusbereich (7) fokussiert,
- **dass** die Überprüfungsvorrichtung (37) dazu ausgebildet ist, durch Verstellen des Scanners (12) mit dem fokussierten zweiten Beleuchtungslicht (35) die Detektionshilfsapertur (25) oder die mehreren Detektionshilfsaperturen (25) des Hilfsdetektors (24) in den mehreren Detektionshilfsaperturstellungen abzutasten, wobei die Überprüfungsvorrichtung (37) weitere erste Intensitätsverteilungen des von dem Hilfsdetektor (24) registrierten zweiten Beleuchtungslichts (35) über verschiedene Stellungen des Scanners (12) hinweg erfasst, oder ein zweiter weiterer Hilfsdetektors mit einer konzentrisch zu einer zweiten Emissionsapertur der zweiten Lichtquelle (34) angeordneten zweiten weiteren Detektionshilfsapertur vorhanden ist, wobei die Überprüfungsvorrichtung (37) dazu ausgebildet ist, durch Verstellen des Scanners (12) mit dem Hilfslicht (22), das durch die Emissionshilfsapertur (21) oder die mehreren Emissionshilfsaperturen (21) der Hilfslichtquelle (20) in den mehreren Emissionshilfsaperturstellungen austritt, die zweite weitere Detektionshilfsapertur abzutasten, wobei die Überprüfungsvorrichtung (37) weitere erste Intensitätsverteilungen des von dem zweiten weiteren Hilfsdetektor registrierten Hilfslichts (22) über verschiedene Stellungen des Scanners (12) hinweg erfasst, und
- **dass** die Überprüfungsvorrichtung (37) dazu ausgebildet ist, aus Unterschieden zwischen den weiteren ersten Intensitätsverteilungen eine weitere Fokuslage eines Fokus des fokussierten zweiten Beleuchtungslichts der zweiten Lichtquelle in dem Fokusbereich in Richtung der optischen Achse (39) zu erfassen.

8. Mikroskopbaugruppe (3) nach Anspruch 7, **dadurch gekennzeichnet, dass** das von der zweiten Lichtquelle (34) bereitgestellte zweite Beleuchtungslicht (35) Fluoreszenzverhinderungslicht ist.

9. Mikroskopbaugruppe (3) nach einem der Ansprüche 1 bis 8, **dadurch gekennzeichnet,**
- **dass** die scannende und entscannende Mikroskopbaugruppe (3) einen zweites Licht (30) aus dem Fokusbereich (7) detektierenden zweiten Detektor (38) aufweist, der eine zweite Detektionsapertur (41) aufweist,
- **dass** die Überprüfungsvorrichtung (37) dazu ausgebildet ist, durch Verstellen des Scanners (12) mit dem Hilfslicht (22), das durch die Emissionshilfsapertur (21) oder die mehreren Emissionshilfsaperturen (21) der Hilfslichtquelle (20) in den mehreren Emissionshilfsaperturstellungen austritt, die zweite Detektionsapertur (41) des zweiten Detektors (38) abzutasten, wobei die Überprüfungsvorrichtung (37) weitere zweite Intensitätsverteilungen des von dem zweiten Detektor (38) registrierten Hilfslichts (22) über die Stellungen des Scanners (12) hinweg erfasst, oder
eine zweites weiteres Hilfslicht bereitstellende zweite weitere Hilfslichtquelle mit einer zweiten weiteren Emissionshilfsapertur, die konzentrisch zu der zweiten Detektionsapertur (41) angeordnet ist und durch die das zweite weitere Hilfslicht austritt, vorhanden ist, wobei die Überprüfungsvorrichtung (37) dazu ausgebildet ist, durch Verstellen des Scanners (12) mit dem zweiten weiteren Hilfslicht von der zweiten weiteren Hilfslichtquelle die Detektionshilfsapertur (25) oder die mehreren Detektionshilfsaperturen (25) des Hilfsdetektors (24) in den mehreren Detektionshilfsaperturstellungen abzutasten, wobei die Überprüfungsvorrichtung (37) weitere zweite Intensitätsverteilungen des von dem ersten Hilfsdetektor (24) registrierten zweiten weiteren Hilfslichts über die Stellungen des Scanners (12) hinweg erfasst, und
- **dass** die Überprüfungsvorrichtung (37) dazu ausgebildet ist, aus Unterschieden zwischen den weiteren zweiten Intensitätsverteilungen eine weitere Bildlage eines Bilds der zweiten Detektionsapertur (41) des zweiten Detektors in dem Fokusbereich (7) in Richtung der optischen Achse (39) zu erfassen.

10. Laserscanningmikroskop (1) mit
- einem Objektiv und
- einer Mikroskopbaugruppe (3) nach einem der Ansprüche 1 bis 9,
- wobei die Detektionshilfsaperturstellungen und/oder die Emissionshilfsaperturstellungen um eine Zwischenbildebene eines die scannende und entscannende Mikroskopbaugruppe (3) und das Objektiv (2) umfassenden Mikroskopstrahlengang herum angeordnet sind oder
- die Detektionshilfsaperturstellungen und/oder die Emissionshilfsaperturstellungen in einem Abzweig (16) von einem Hauptstrahlengang (17) eines die scannende und entscannende Mikroskopbaugruppe (3) und das Objektiv (2) umfassenden Mikroskopstrahlengang um eine Zwischenbildebene herum angeordnet sind.

11. Laserscanningmikroskop (1) nach Anspruch 10, **dadurch gekennzeichnet, dass** die Detektionshilfsaperturstellungen und/oder die Emissionshilfsaperturstellungen längs der optischen Achse (39) jeweils über eine Entfernung von 0,5 mm bis 10 mm und/oder über eine Entfernung von 0,2 µm x M² bis 1 µm x M² verteilt sind, wobei M eine Vergrößerung zwischen einem Objektfokusbereich auf einer Objektseite des Objektivs (2) und der Zwischenbildebene ist.

12. Hilfsvorrichtung (18) zur Überprüfung der Konfokalität einer scannenden und entscannenden Mikroskopbaugruppe (3) mit
- einem zum Anschließen der Hilfsvorrichtung (18) in definierter Relativlage an die scannende und entscannende Mikroskopbaugruppe (3) ausgebildeten Anschluss (73),
- einer in fester Orientierung zu dem Anschluss (73) verlaufenden optischen Achse (39),
- einem Hilfsdetektor (24) mit
- einer gegenüber dem Anschluss (73) in mehrere in Richtung der optischen Achse (39) voneinander beabstandete Detektionshilfsaperturstellungen verfahrbaren Detektionshilfsapertur (25) oder
- mehreren Detektionshilfsaperturen (25) in mehreren, in Richtung der optischen Achse (39) und lateral zu der optischen Achse (39) voneinander beabstandeten Detektionshilfsaperturstellungen
und einer Hilfslicht (22) bereitstellenden Hilfslichtquelle (20) mit
- einer gegenüber dem Anschluss (73) in mehrere in Richtung der optischen Achse (39) voneinander beabstandete Emissionshilfsaperturstellungen verfahrbaren Emissionshilfsapertur (21) oder
- mehreren Emissionshilfsaperturen (21) in mehreren, in Richtung der optischen Achse (39) und lateral zu der optischen Achse (39) voneinander beabstandeten Emissionshilfsaperturstellungen,
aus der/denen das Hilfslicht (22) austritt.

13. Hilfsvorrichtung (18) nach Anspruch 12, **dadurch gekennzeichnet, dass** die Detektionshilfsapertur(en) (25) und die Emissionshilfsapertur(en) (21)
- paarweise konzentrisch angeordnet sind und/oder
- längs der optischen Achse (39) über eine Entfernung von 0,5 mm bis 10 mm verteilt sind und/oder
- gleiche Formen und Abmessungen quer zu der optischen Achse (39) aufweisen.

14. Hilfsvorrichtung (18) nach Anspruch 12 oder 13, **dadurch gekennzeichnet, dass** mindestens ein photoelektrisches Bauteil (19) sowohl Teil der Hilfslichtquelle (20) als auch Teil des Hilfsdetektors (24) ist, wobei das photoelektrische Bauteil (19) optional eine Leuchtdiode, eine Superlumineszenzdiode, eine Laserdiode oder eine Fotodiode ist.

15. Hilfsvorrichtung (18) nach Anspruch 12 oder 13, **dadurch gekennzeichnet,**
- **dass** die Detektionshilfsapertur(en) (25) des Hilfsdetektors (24) und die Emissionshilfsapertur(en) (21) der Hilfslichtquelle (20) mit mindestens einem Endquerschnitt (39) eines Lichtleiters (40) ausgebildet sind, wobei der Lichtleiter (40) optional über einen Freistrahl-Strahlteiler, einen Faserstrahlteiler oder einen Zirkulator (41) zu der Hilfslichtquelle (20) und dem Hilfsdetektor (24) verzweigt ist, oder
- **dass** die Detektionshilfsaperturen (25) des Hilfsdetektors (24) und die Emissionshilfsaperturen (21) der Hilfslichtquelle (20) mit Löchern in verschiedenen Schichten eines Schichtaufbaus oder in verschiedenen Tiefen einer Platte (70) ausgebildet sind, wobei ein Strahlengang auf einer Rückseite des Schichtaufbaus oder der Platte (70) optional zu der Hilfslichtquelle (20) und dem Hilfsdetektor (24) verzweigt ist.

## Claims

1. Scanning and descanning microscope component group (3) comprising
(a) a first light source (4) providing first illumination light (23);
(b) focusing optics (27) focusing the first illumination light (23) along an optical axis (39) into a focal area (7);
(c) a first detector (8) having a first detection aperture (11) and detecting first light coming out of the focal area (7);
(d) a scanner (12) arranged between the first light source (4) and the first detector (8) , on its one side, and the focal area (7), on its other side, and scanning laterally with respect to the optical axis (39);
(A) an auxiliary detector (24) arranged or to be arranged in the focal area (7), the first auxiliary detector comprising
- an auxiliary detection aperture (25) movable into a plurality of auxiliary detection aperture positions arranged at distances in direction of the optical axis (39) or
- a plurality of auxiliary detection apertures (25) in a plurality of auxiliary detection aperture positions arranged at distances in direction of the optical axis (39) and laterally with respect to the optical axis (39),
and/or an auxiliary light source (20) arranged or to be arranged in the focal area (7) and providing auxiliary light (22), the auxiliary light source comprising
- an auxiliary emission aperture (21) movable into in a plurality of auxiliary emission aperture positions arranged at distances in direction of the optical axis (39) or
- a plurality of auxiliary emission apertures (21) in a plurality of auxiliary emission aperture positions arranged at distances in direction of the optical axis (39) and laterally with respect to the optical axis (39),
through which the auxiliary light (22) emerges,
wherein, if both the auxiliary detector (24) and the auxiliary light source (20) are arranged in the focal area (7), the auxiliary detection aperture(s) (25) and the auxiliary emission aperture(s) (21) are arranged concentrically in pairs;
and a checking device (37);
(B) wherein the checking device (37) is configured for scanning the auxiliary detection aperture (25) or the plurality of auxiliary detection apertures (25) of the auxiliary detector (24) in the plurality of auxiliary detection aperture positions with the focused first illumination light ( 23) by setting the scanner (12), wherein the checking device (37) registers first intensity distributions of the first illumination light (23) detected by the auxiliary detector (24) over different settings of the scanner (12), or
a first further auxiliary detector (54) having a first auxiliary detection aperture (60) arranged concentrically with respect to a first emission aperture (59) of the first light source (4) is provided and wherein the checking device (37) is configured for scanning the first auxiliary detection aperture (60) with the auxiliary light (22) that emerges through the auxiliary emission aperture (21) or the plurality of auxiliary emission apertures of the auxiliary light source (20) in the plurality of auxiliary emission aperture positions by setting the scanner (12), wherein the checking device (37) registers first intensity distributions of the auxiliary light (22) detected by the first further auxiliary detector (54) over different settings of the scanner (12); and
(C) wherein the checking device (37) is configured for scanning the first detection aperture (11) of the first detector (8) with the auxiliary light (22) that emerges through the auxiliary emission aperture (21) or the plurality of auxiliary emission apertures (21) of the auxiliary light source (20) in the plurality of auxiliary emission aperture positions by setting the scanner (12), wherein the checking device (37) registers second intensity distributions of the auxiliary light (22) detected by the first detector (8) over the settings of the scanner (12), or
a first further auxiliary light source (48) providing first further auxiliary light and having a first further auxiliary emission aperture (53), which is arranged concentrically with respect to the first detection aperture (11) and through which the first further auxiliary light emerges, is provided, and wherein the checking device (37) is configured for scanning the auxiliary detection aperture (25) or the plurality of auxiliary detection apertures (25) of the auxiliary detector (24) in the plurality of auxiliary detection aperture positions with the first further auxiliary light that emerges through the first further auxiliary emission aperture (53) by setting the scanner (12), wherein the checking device (37) registers second intensity distributions of the first further auxiliary light detected by the first auxiliary detector (24) over the settings of the scanner (12).

2. Scanning and descanning microscope component group (3) of claim 1, **characterized in that** the checking device (37) is configured for comparing the first intensity distributions and for determining a focus position of a focus (47) of the focused first illumination light (23) of the first light source (4) in the focal area (7) in direction of the optical axis (39) from differences between the first intensity distributions, and an image position of an image of the first detection aperture (11) of the first detector (8) in the focal area (7) in direction of the optical axis (39) from differences between the second intensity distributions.

3. Scanning and descanning microscope component group (3) of any of the claims 1 and 2, **characterized in that** plurality of auxiliary detection apertures (25) of the auxiliary detector (24) and/or the plurality of auxiliary emission apertures (21) of the auxiliary light source (20) have same shapes and dimensions orthogonal to the optical axis (39).

4. Scanning and descanning microscope component group (3) of any of the claims 1 to 3, **characterized in that** the auxiliary detection aperture(s) (25) of the auxiliary detector (24) and the auxiliary emission aperture(s) (21) of the auxiliary light source (20) are congruent in pairs.

5. Scanning and descanning microscope component group (3) of claim 3 or 4, **characterized in that** at least one photoelectric component (19) is both part of the auxiliary light source (20) and of the auxiliary detector (24), wherein the photoelectric component (19) optionally is a light emitting diode, a super luminescence diode, a laser diode or a photo diode.

6. Scanning and descanning microscope component group (3) of claim 3 or 4, **characterized in**
- **that** the auxiliary detection aperture(s) (25) of the auxiliary detector (24) and the auxiliary emission aperture(s) (21) of the auxiliary light source (20) are provided by an least one end cross section (39) of an optical fiber (40), wherein the optical fiber (40) is optionally branched towards the auxiliary light source (20) and the auxiliary detector (24) by means of an open beam beam splitter, a fiber beam splitter or a circulator (41), or
- **that** the auxiliary detection aperture(s) (25) of the auxiliary detector (24) and the auxiliary emission aperture(s) (21) of the auxiliary light source (20) are provided by holes (64) in different layers of a layered structure or in different depths of a plate (70), wherein a beam path on the back side of the respective layered structure or of the plate (70) is optionally branched towards the auxiliary light source (20) and the auxiliary detector (24).

7. Scanning and descanning microscope component group (3) of any of the claims 1 to 6, **characterized in**
- **that** the scanning and descanning microscope component group (3) comprises a second light source (34) providing second illumination light (35), wherein the focusing optics (27) focus the second illumination light (35) along the optical axis (39) in the focal area (7);
- **that** the checking device (37) is configured for scanning the auxiliary detection aperture (25) or the plurality of auxiliary detection apertures (25) of the auxiliary detector (24) in the plurality of auxiliary detection aperture positions with the focused second illumination light (35) by setting the scanner (12), wherein the checking device (37) registers further first intensity distributions of the second illumination light (35) detected by the auxiliary detector (24) over different settings of the scanner (12), or
a second further auxiliary detector having a second further auxiliary detection aperture arranged concentrically with respect to a second emission aperture of the second light source (34) is provided, wherein the checking device (37) is configured for scanning the second further auxiliary detection aperture with the auxiliary light (22) that emerges through the auxiliary emission aperture (21) or the plurality of emission apertures (21) of the auxiliary light source (20) in the plurality of auxiliary emission aperture positions by setting the scanner (12), wherein the checking device (37) registers further first intensity distributions of the auxiliary light (22) detected by the second further auxiliary detector over different settings of the scanner (12); and
**that** the checking device (37) is configured for determining a further focus position of a focus of the focused second illumination light of the second light source in the focal area in direction of the optical axis from differences between the further first intensity distributions.

8. Scanning and descanning microscope component group (3) of claim 7, **characterized in that** the second illumination light (35) provided by the second light source (34) is fluorescence inhibiting light.

9. Scanning and descanning microscope component group (3) of any of the claims 1 to 8, **characterized in**
- **that** the scanning and descanning microscope component group (3) comprises a second detector (38) detecting second light (30) coming out of the focal area (7) and having a second detection aperture (41);
- **that** the checking device (37) is configured for scanning the second detection aperture (41) of the second detector (38) with the auxiliary light (22) that emerges through the auxiliary emission aperture (21) or the plurality of auxiliary emission apertures (21) of the auxiliary light source (20) in the plurality of auxiliary emission aperture positions by setting the scanner (12), wherein the checking device (37) registers further second intensity distributions of the auxiliary light (22) detected by the second detector (38) over the settings of the scanner (12), or
a second further auxiliary light source providing second further auxiliary light and having a second further auxiliary emission aperture, which is arranged concentrically with respect to the second detection aperture (41) and through which the second further auxiliary light emerges, is provided, wherein the checking device (37) is configured for scanning the auxiliary detecting aperture (25) or the plurality of auxiliary detection apertures (25) of the auxiliary detector (24) in the plurality of auxiliary detection aperture positions with the second further auxiliary light from the second further auxiliary light source by setting the scanner (12), wherein the checking device (37) registers further second intensity distributions of the second further auxiliary light detected by the first auxiliary detector (24) over the settings of the scanner (12);
and
wherein the checking device (37) is configured for determining a further image position of an image of the second detection aperture (41) of the second detector in the focal area (7) in direction of the optical axis (39) from differences between the further second intensity distributions.

10. Laser scanning microscope (1) comprising
- an objective and
- a microscope component group (3) of any of the claims 1 to 9,
- wherein the auxiliary detection aperture positions and/or the auxiliary emission aperture positions are arranged around an intermediate image plane of a microscope beam path including the scanning and descanning microscope component group (3) and the objective (2) or
- the auxiliary detection aperture positions and/or the auxiliary emission aperture positions are arranged around an intermediate image plane in a branch (16) that branches off a main microscope beam path (17) of a microscope beam path including the scanning and descanning microscope component group (3) and the objective (2).

11. Laser scanning microscope (1) of claim 10, **characterized in that** the auxiliary detection aperture positions and/or the auxiliary emission aperture positions are each distributed along the optical axis (39) over a distance of 0,5 mm to 10 mm and/or over a distance of 0.2 µm x M² to 1 µm x M², wherein M is a magnification between an object focal area on an object side of the objective (2) and the intermediate image plane.

12. Auxiliary apparatus (18) for checking the confocality of a scanning and descanning microscope component group (3), the auxiliary apparatus (18) comprising
- a connector (73) configured for connecting the auxiliary apparatus (18) in a defined relative position to The scanning and descanning microscope component group (3);
- an optical axis (39) running at a fixed orientation with respect to the connector (73);
- an auxiliary detector (24) comprising
- an auxiliary detection aperture (25) moveable with respect to the connector (73) into a plurality of auxiliary detection aperture positions that are arranged at distances in direction of the optical axis (39), or
- a plurality of auxiliary detection apertures (25) in a plurality of auxiliary detection aperture positions that are arranged at distances in direction of the optical axis (39) and laterally with respect to the optical axis (39);
and an auxiliary light source (20) providing auxiliary light (22) and comprising
- an auxiliary emission aperture (21) moveable with respect to the connector (73) into a plurality of auxiliary emission aperture positions arranged at distances in direction of the optical axis (39), or
- a plurality of auxiliary emission apertures (21) in a plurality of auxiliary emission aperture positions arranged at distances in direction of the optical axis (39) and laterally with respect to the optical axis (39).

13. Auxiliary apparatus (18) of claim 12, **characterized in that** the auxiliary detection aperture(s) (25) and the auxiliary emission aperture(s) (21)
- are arranged concentrically in pairs and/or
- are distributed along the optical axis (39) over a distance of 0,5 mm to 10 mm and/or
- have same shapes and dimensions orthogonal to the optical axis (39).

14. Auxiliary apparatus (18) of claim 12 or 13, **characterized in that** at least one photoelectric component (19) is both part of the auxiliary light source (20) and part of the auxiliary detector (24), wherein the photoelectric component (19) optionally is a light emitting diode, a super luminescence diode, a laser diode or a photo diode.

15. Auxiliary apparatus (18) of claim 12 or 13, **characterized in**
- **that** the auxiliary detection aperture(s) (25) of the auxiliary detector (24) and the auxiliary emission aperture(s) (21) of the auxiliary light source (20) are provided by an least one end cross section (39) of an optical fiber (40), wherein the optical fiber (40) is optionally branched towards the auxiliary light source (20) and the auxiliary detector (24) by means of an open beam beam splitter, a fiber beam splitter or a circulator (41), or
- **that** the auxiliary detection aperture(s) (25) of the auxiliary detector (24) and the auxiliary emission aperture(s) (21) of the auxiliary light source (20) are provided by holes (64) in different layers of a layered structure or in different depths of a plate (70), wherein a beam path on the back side of the respective layered structure or of the plate (70) is optionally branched towards the auxiliary light source (20) and the auxiliary detector (24).

## Revendications

1. Assemblage de microscope à balayage et à débalayage (3) comprenant
(a) une première source lumineuse (4) fournissant une première lumière d'éclairage (23),
(b) une optique (27) focalisant la première lumière d'éclairage (23) le long d'un axe optique (39) dans une zone focale (7),
(c) un premier détecteur (8) détectant la première lumière provenant de la zone focale (7), qui présente une première ouverture de détection (11),
(d) un scanner (12) balayant latéralement par rapport à l'axe optique (39), qui est agencé entre la première source lumineuse (4) et le premier détecteur (8) d'une part et la zone focale (7) d'autre part,
(A) un détecteur auxiliaire (24) agencé ou pouvant être agencé dans la zone focale (7) avec
- une ouverture de détection auxiliaire (25) pouvant être déplacée dans plusieurs positions d'ouverture de détection auxiliaires espacées les unes des autres dans la direction de l'axe optique (39) ou
- plusieurs ouvertures de détection auxiliaires (25) dans plusieurs positions d'ouverture de détection auxiliaires espacées dans la direction de l'axe optique (39) et latéralement à l'axe optique (39)
et/ou une source lumineuse auxiliaire (20) agencée ou pouvant être agencée dans la zone focale (7) et fournissant une lumière auxiliaire (22) avec
- une ouverture d'émission auxiliaire (21) pouvant être déplacée dans plusieurs positions d'ouverture d'émission auxiliaires espacées les unes des autres dans la direction de l'axe optique (39) ou
- une pluralité d'ouvertures d'émission auxiliaires (21) dans une pluralité de positions d'ouverture d'émission auxiliaires espacées dans la direction de l'axe optique (39) et latéralement par rapport à l'axe optique (39),
dont sort la lumière auxiliaire (22),
dans lequel, lorsque le détecteur auxiliaire (24) et la source lumineuse auxiliaire (20) sont agencés dans la zone focale (7), la ou les ouvertures de détection auxiliaires (25) et la ou les ouvertures d'émission auxiliaires (21) sont agencées de manière concentrique par paires, et un dispositif de vérification (37),
(B) le dispositif de vérification (37) étant conçu pour balayer l'ouverture de détection auxiliaire (25) ou la pluralité d'ouvertures de détection auxiliaires (25) du détecteur auxiliaire (24) dans la pluralité de positions d'ouverture de détection auxiliaires en réglant le scanner (12) avec la première lumière d'éclairage focalisée (23), le dispositif de vérification (37) détectant des premières répartitions d'intensité de la première lumière d'éclairage (23) enregistrées par le détecteur auxiliaire (24) dans différentes positions du scanner (12), ou un premier autre détecteur auxiliaire (54) est présent avec une ouverture de détection auxiliaire (60) agencée de manière concentrique par rapport à une première ouverture d'émission (59) de la première source lumineuse (4) et le dispositif de vérification (37) étant conçu pour balayer la première ouverture de détection auxiliaire (60) en déplaçant le scanner (12) avec la lumière auxiliaire (22) qui sort à travers l'ouverture d'émission auxiliaire (21) ou la pluralité d'ouvertures d'émission auxiliaires de la source lumineuse auxiliaire (20) dans la pluralité de positions d'ouverture d'émission auxiliaires, le dispositif de vérification (37) détectant des premières répartitions d'intensité de la lumière auxiliaire (22) enregistrées par le premier autre détecteur auxiliaire (54) sur différentes positions du scanner (12), et
(C) dans lequel le dispositif de vérification (37) est conçu pour balayer la première ouverture de détection (11) du premier détecteur (8) en déplaçant le scanner (12) avec la lumière auxiliaire (22) qui sort à travers l'ouverture d'émission auxiliaire (21) ou la pluralité d'ouvertures d'émission auxiliaires (21) de la source lumineuse auxiliaire (20) dans la pluralité de positions d'ouverture d'émission auxiliaires, le dispositif de vérification (37) détectant des deuxièmes répartitions d'intensité de la lumière auxiliaire (22) enregistrées par le premier détecteur (8) sur les positions du scanner (12), ou une première source lumineuse auxiliaire supplémentaire (48) est présente, fournissant une première lumière auxiliaire supplémentaire, avec une première ouverture d'émission auxiliaire supplémentaire (53) qui est agencée de manière concentrique par rapport à la première ouverture de détection (11) et d'où sort la première lumière auxiliaire supplémentaire et le dispositif de vérification (37) étant conçu pour balayer l'ouverture de détection auxiliaire (25) ou la pluralité d'ouvertures de détection auxiliaires (25) du détecteur auxiliaire (24) dans la pluralité de positions d'ouverture de détection auxiliaires en déplaçant le scanner (12) avec la première autre lumière auxiliaire sortant à travers la première autre ouverture d'émission auxiliaire (53), le dispositif de vérification (37) détectant des deuxièmes répartitions d'intensité de la première autre lumière auxiliaire enregistrée par le premier détecteur auxiliaire (24) à travers les positions du scanner (12).

2. Assemblage de microscope (3) selon la revendication 1, **caractérisé en ce que** le dispositif de vérification (37) est conçu pour comparer les répartitions d'intensité entre elles et pour détecter ainsi, à partir des différences entre les premières répartitions d'intensité, une position focale d'un point focal (47) de la première lumière d'éclairage focalisée (23) de la première source lumineuse (4) dans la zone focale (7) en direction de l'axe optique (39) et pour détecter, à partir de différences entre les deuxièmes répartitions d'intensité, une position d'image d'une image de la première ouverture de détection (11) du premier détecteur (8) dans la zone focale (7) en direction de l'axe optique (39), le dispositif de vérification (37) étant conçu facultativement pour détecter des écarts de la position focale par rapport à une position focale cible et de la position d'image par rapport à une position d'image cible et pour les compenser par un déplacement relatif réel et/ou virtuel de la première ouverture de détection (11) du premier détecteur (8) par rapport à la première source lumineuse (4).

3. Assemblage de microscope (3) selon l'une des revendications 1 et 2, **caractérisé en ce que** la pluralité d'ouvertures de détection auxiliaires (25) du détecteur auxiliaire (24) et/ou la pluralité d'ouvertures d'émission auxiliaires (21) de la source lumineuse auxiliaire (20) ont les mêmes formes et dimensions transversalement à l'axe optique (39).

4. Assemblage de microscope (3) selon l'une des revendications 1 à 3, **caractérisé en ce que** la ou les ouvertures de détection auxiliaires (25) du détecteur auxiliaire (24) et la ou les ouvertures d'émission auxiliaires (21) de la source lumineuse auxiliaire (20) sont congruents par paires.

5. Assemblage de microscope (3) selon la revendication 3 ou 4, **caractérisé en ce qu**'au moins un composant photoélectrique (19) fait à la fois partie de la source lumineuse auxiliaire (20) et du détecteur auxiliaire (24), le composant photoélectrique (19) étant facultativement une diode électroluminescente, une diode superluminescente, une diode laser ou une photodiode.

6. Assemblage de microscope (3) selon la revendication 3 ou 4, **caractérisé en ce que**
- la ou les ouvertures de détection auxiliaires (25) du détecteur auxiliaire (24) et/ou la ou les ouvertures d'émission auxiliaires (21) de la source lumineuse auxiliaire (20) sont conçues avec au moins une section transversale d'extrémité (39) d'un conducteur optique (40), le conducteur optique (40) étant facultativement ramifié vers la source lumineuse auxiliaire (20) et le détecteur auxiliaire (24) par l'intermédiaire d'un diviseur de faisceau à faisceau libre, d'un diviseur de faisceau à fibre ou d'un circulateur (41), ou
- les ouvertures de détection auxiliaires (25) du détecteur auxiliaire (24) et/ou les ouvertures d'émission auxiliaires (21) de la source lumineuse auxiliaire (20) sont formées de trous (64) dans différentes couches d'une structure en couches ou dans différentes profondeurs d'une plaque (70), un trajet de faisceau sur une face arrière de la structure stratifiée ou de la plaque (70) étant facultativement ramifié vers la source lumineuse auxiliaire (20) et le détecteur auxiliaire (24).

7. Assemblage de microscope (3) selon l'une des revendications 1 à 6, **caractérisé en ce que**
- le microscope à balayage et à débalayage (3) comporte une deuxième source lumineuse (34) fournissant une deuxième lumière d'éclairage (35), l'optique de focalisation (27) focalisant la deuxième lumière d'éclairage (35) le long de l'axe optique (39) dans la zone focale (7),
- le dispositif de vérification (37) est conçu pour balayer l'ouverture de détection auxiliaire (25) ou la pluralité d'ouvertures de détection auxiliaires (25) du détecteur auxiliaire (24) dans la pluralité de positions d'ouverture de détection auxiliaires en déplaçant le scanner (12) avec la deuxième lumière d'éclairage focalisée (35), le dispositif de vérification (37) détectant d'autres premières répartitions d'intensité de la deuxième lumière d'éclairage (35) enregistrées par le détecteur auxiliaire (24) sur différentes positions du scanner (12), ou un deuxième détecteur auxiliaire supplémentaire est présent avec une deuxième ouverture de détection auxiliaire agencée de manière concentrique par rapport à une deuxième ouverture d'émission de la deuxième source lumineuse (34), le dispositif de vérification (37) étant adapté pour balayer la deuxième autre ouverture de détection auxiliaire en déplaçant le scanner (12) avec la lumière auxiliaire (22) qui sort à travers l'ouverture d'émission auxiliaire (21) ou la pluralité d'ouvertures d'émission auxiliaires (21) de la source lumineuse auxiliaire (20) dans la pluralité de positions d'ouverture d'émission auxiliaires, le dispositif de vérification (37) détectant d'autres premières répartitions d'intensité de la lumière auxiliaire (22) enregistrées par le deuxième détecteur auxiliaire sur différentes positions du scanner (12) et **en ce que** le dispositif de vérification (37) est conçu pour détecter, à partir de différences entre les autres premières répartitions d'intensité, une autre position focale d'un point focal de la deuxième lumière d'éclairage focalisée de la deuxième source lumineuse dans la zone de point focal dans la direction de l'axe optique (39).

8. Assemblage de microscope (3) selon la revendication 7, **caractérisé en ce que** la deuxième lumière d'éclairage (35) fournie par la deuxième source lumineuse (34) est une lumière de prévention de la fluorescence.

9. Assemblage de microscope (3) selon l'une des revendications 1 à 8, **caractérisé en ce que**
- le microscope à balayage et à débalayage (3) comporte un deuxième détecteur (38) qui détecte une deuxième lumière (30) provenant de la zone focale (7) et qui présente une deuxième ouverture de détection (41),
- le dispositif de vérification (37) est conçu pour balayer la deuxième ouverture de détection (41) du deuxième détecteur (38) en déplaçant le scanner (12) avec la lumière auxiliaire (22) qui sort à travers l'ouverture d'émission auxiliaire (21) ou la pluralité d'ouvertures d'émission auxiliaires (21) de la source lumineuse auxiliaire (20) dans la pluralité de positions d'ouverture d'émission auxiliaires, le dispositif de vérification (37) détectant d'autres deuxièmes répartitions d'intensité de la lumière auxiliaire (22) enregistrées par le deuxième détecteur (38) à travers les positions du scanner (12), ou
une deuxième source lumineuse auxiliaire supplémentaire fournissant une deuxième lumière auxiliaire supplémentaire est présente, avec une deuxième ouverture d'émission auxiliaire qui est disposée de manière concentrique par rapport à la deuxième ouverture de détection (41) et à travers laquelle sort la deuxième lumière auxiliaire supplémentaire, le dispositif de vérification (37) étant conçu pour balayer l'ouverture de détection auxiliaire (25) ou la pluralité d'ouvertures de détection auxiliaires (25) du détecteur auxiliaire (24) dans la pluralité de positions d'ouverture de détection auxiliaires en déplaçant le scanner (12) avec la deuxième lumière auxiliaire à partir de la deuxième source lumineuse auxiliaire, le dispositif de vérification (37) détectant d'autres deuxièmes répartitions d'intensité de la deuxième autre lumière auxiliaire enregistrée par le premier détecteur auxiliaire (24) à travers les positions du scanner (12), et
- **en ce que** le dispositif de vérification (37) est adapté pour détecter, à partir de différences entre les autres deuxièmes répartitions d'intensité, une autre position d'image d'une image de la deuxième ouverture de détection (41) du deuxième détecteur dans la zone focale (7) dans la direction de l'axe optique (39).

10. Microscope à balayage laser (1) avec
- un objectif et
- un assemblage de microscope (3) selon l'une des revendications 1 à 9,
- dans lequel les positions d'ouverture de détection auxiliaires et/ou les positions d'ouverture d'émission auxiliaires sont agencées autour d'un plan d'image intermédiaire d'un trajet de faisceau de microscope comprenant l'assemblage de microscope à balayage et à débalayage (3) et l'objectif (2), ou
- les positions d'ouverture de détection auxiliaires et/ou les positions d'ouverture d'émission auxiliaires sont agencées dans une branche (16) d'un trajet de faisceau principal (17) d'un trajet de faisceau de microscope comprenant l'assemblage de microscope à balayage et à débalayage (3) et l'objectif (2 ) autour d'un plan d'image intermédiaire.

11. Assemblage de microscope à balayage laser (1) selon la revendication 10, **caractérisé en ce que** les positions d'ouverture de détection auxiliaires et/ou les positions d'ouverture d'émission auxiliaires sont réparties le long de l'axe optique (39) respectivement sur une distance de 0,5 mm à 10 mm et/ou sur une distance de 0,2 pm x M² à 1 pm x M², M étant un grossissement entre une zone de mise au point de l'objet sur un côté objet de l'objectif (2) et le plan d'image intermédiaire.

12. Dispositif auxiliaire (18) pour le contrôle de la confocalité d'un assemblage de microscope à balayage et à débalayage (3), comprenant
- un raccord (73) conçu pour raccorder le dispositif auxiliaire (18) à l'assemblage de microscope à balayage et à débalayage (3) dans une position relative définie,
- un axe optique (39) s'étendant dans une orientation fixe par rapport au raccord (73), un détecteur auxiliaire (24) avec
- une ouverture de détection auxiliaire (25) pouvant être déplacée par rapport au raccord (73) dans plusieurs positions d'ouverture de détection auxiliaires espacées les unes des autres dans la direction de l'axe optique (39) ou
- plusieurs ouvertures de détection auxiliaires (25) dans plusieurs positions d'ouverture de détection auxiliaires espacées les unes des autres dans la direction de l'axe optique (39) et latéralement par rapport à l'axe optique (39) et une source lumineuse auxiliaire (20) fournissant une lumière auxiliaire (22) avec
- une ouverture d'émission auxiliaire (21) pouvant être déplacée par rapport au raccord (73) dans une pluralité de positions d'ouverture d'émission auxiliaires espacées dans la direction de l'axe optique (39) ou
- plusieurs ouvertures d'émission auxiliaires (21) dans plusieurs positions d'ouverture d'émission auxiliaires espacées les unes des autres dans la direction de l'axe optique (39) et latéralement par rapport à l'axe optique (39), dont sort la lumière auxiliaire (22).

13. Dispositif auxiliaire (18) selon la revendication 12, **caractérisé en ce que** le ou les ouvertures de détection auxiliaires (25) et la ou les ouvertures d'émission auxiliaires (21)
- sont agencées par paires de manière concentrique et/ou
- sont réparties le long de l'axe optique (39) sur une distance de 0,5 mm à 10 mm et/ou
- présentent des formes et des dimensions identiques transversalement à l'axe optique (39).

14. Dispositif auxiliaire (18) selon la revendication 12 ou 13, **caractérisé en ce qu**'au moins un composant photoélectrique (19) fait partie à la fois de la source lumineuse auxiliaire (20) et du détecteur auxiliaire (24), le composant photoélectrique (19) étant facultativement une diode électroluminescente, une diode superluminescente, une diode laser ou une photodiode.

15. Dispositif auxiliaire (18) selon la revendication 12 ou 13, **caractérisé en ce que**
- la ou les ouvertures de détection auxiliaires (25) du détecteur auxiliaire (24) et la ou les ouvertures d'émission auxiliaires (21) de la source lumineuse auxiliaire (20) sont conçues avec au moins une section transversale d'extrémité (39) d'un conducteur optique (40), le conducteur optique (40) étant facultativement ramifié vers la source lumineuse auxiliaire (20) et le détecteur auxiliaire (24) par l'intermédiaire d'un diviseur de faisceau à faisceau libre, d'un diviseur de faisceau à fibre ou d'un circulateur (41) ou
- les ouvertures de détection auxiliaires (25) du détecteur auxiliaire (24) et les ouvertures d'émission auxiliaires (21) de la source lumineuse auxiliaire (20) sont conçues avec des trous dans différentes couches d'une structure en couches ou à différentes profondeurs d'une plaque (70), un trajet de faisceau sur une face arrière de la structure stratifiée ou de la plaque (70) étant facultativement ramifié vers la source lumineuse auxiliaire (20) et le détecteur auxiliaire (24).
